# EUROPEAN PATENT APPLICATION

(11) **EP 4 831 955 A1**
(43) Date of publication of application: **28.10.2026**
(21) Application number: 24907067.3
(22) Date of filing: 22.11.2024
(51) Int. Cl.: G08G 1/00, B60R 21/00, G08G 1/16

(54) **DRIVING ASSISTANCE DEVICE**

(30) Priority: 20.12.2023 JP 2023214672
(71) Applicant: AISIN CORPORATION, Kariya-shi, Aichi 448-8650 (JP)
(72) Inventor: YAMAMOTO, Kinji, Kariya-shi, Aichi 448-8650 (JP); WATANABE, Kazuya, Kariya-shi Aichi 448-8650 (JP); HACHISUKA, Ryo, Kariya-shi, Aichi 448-8650 (JP); YAMAGUCHI, Wataru, Kariya-shi, Aichi 448-8650 (JP); IMURA, Takumi, Kariya-shi, Aichi 448-8650 (JP); FUJITA, Takayuki, Kariya-shi, Aichi 448-8650 (JP); NISHIO, Yasuaki, Kariya-shi, Aichi 448-8650 (JP); OGINO, Atsuto, Kariya-shi, Aichi 448-8650 (JP); OGUE, Ken, Kariya-shi, Aichi 448-8650 (JP)
(74) Representative: TBK
(86) International application number: PCT/JP2024/041445
(87) International publication number: WO 2025/134679

(57) **Abstract**

Provided is a driving assistance device that allows a user to intuitively grasp that a driving operation to avoid an obstacle or a marking line through autonomous driving assistance is performed. For example, the driving assistance device is configured to: display, on a liquid crystal display 4, a vehicle surrounding image showing surroundings of a vehicle 2; and display, in association with a driving operation to avoid approaching an obstacle or a marking line around the vehicle through automatic control, a screening image 75 in the vehicle surrounding image between the vehicle and the obstacle or the marking line to be avoided.

## Description

### TECHNICAL FIELD

The present invention relates to a driving assistance device that assists driving of a vehicle.

### BACKGROUND ART

In recent years, there have been newly proposed autonomous driving assistance systems that, in addition to manual driving in which a vehicle travels based on user's driving operations as the traveling mode of the vehicle, assist the user in driving the vehicle by causing the vehicle to perform part or all of the user's driving operations. In the autonomous driving assistance system, for example, a current position of the vehicle, a traveling lane of the vehicle, and positions of other surrounding vehicles are detected at any time, and vehicle control on a steering system, a drive source, and a braking system is automatically performed such that the vehicle travels along a preset route.

When avoiding an obstacle during the manual driving, the user recognizes the obstacle and selects an operation to avoid the obstacle, thereby performing a steering or braking operation. Therefore, there is basically no steering or braking operation (deceleration) that the user does not expect. When the vehicle travels by the above autonomous driving assistance, the steering or braking operation to avoid an obstacle is performed automatically. Therefore, in a situation in which the user is not paying much attention to the surroundings, a steering or braking operation that the user does not expect may be performed and the user may be confused. One way to solve this problem is to superimpose an image of a three-dimensional object on the position of an obstacle included in a surrounding image displayed on an in-vehicle monitor as disclosed in, for example, Japanese Unexamined Patent Application Publication No. 2004-240480 (JP 2004-240480 A), thereby allowing the user to grasp the presence of the obstacle in advance.

### Related Art Documents

### Patent Documents

Patent Document 1: Japanese Unexamined Patent Application Publication No. 2004-240480 (JP 2004-240480 A) (paragraphs 0079-0087)

### SUMMARY OF THE INVENTION

### Problem to be Solved by the Invention

Patent Document 1 also discloses that, when the vehicle approaches an obstacle, the display color of the three-dimensional object is changed or the three-dimensional object is flashed. The basic purpose of these operations is to allow the user to grasp the presence of the obstacle without overlooking it. Although the changing of the display color or the flashing of the display allows the user to easily grasp the presence of an obstacle, it does not provide guidance leading to an impression that the steering or braking operation is performed. Therefore, even if the three-dimensional object is displayed as described in Patent Document 1 and the steering or braking operation to avoid an obstacle is automatically performed by the autonomous driving assistance, there is still a problem that the user is confused due to the steering or braking operation that the user does not expect. When the vehicle travels by the autonomous driving assistance, the vehicle basically travels to stay within marking lines in a section with marking lines. Therefore, at forks and curves, for example, the vehicle automatically performs the steering or braking operation along the marking lines to travel along the marking lines. Therefore, the same problem occurs not only with obstacles but also with marking lines.

The present invention has been made to solve the above problem in the conventional art, and has an object to provide a driving assistance device that allows a user to intuitively grasp that a driving operation to avoid an obstacle or a marking line through autonomous driving assistance is performed by displaying a screening image between a host vehicle and the obstacle or the marking line in association with the driving operation to avoid the obstacle or the marking line through the autonomous driving assistance.

### Means for Solving the Problem

In order to achieve the above object, the driving assistance device according to the present invention is a driving assistance device that performs automatic control on at least part of driving operations on a vehicle. The driving assistance device is configured to: display, on a display device, a vehicle surrounding image showing surroundings of the vehicle; and display, in association with a driving operation to avoid approaching an obstacle or a marking line around the vehicle through the automatic control, a screening image in the vehicle surrounding image between the vehicle and the obstacle or the marking line to be avoided.
The "autonomous driving assistance" refers to a function of performing at least part of the driver's vehicle driving operations on behalf of the driver, or assisting the driver in performing at least part of the driver's vehicle driving operations.
The "vehicle surrounding image" may be an image of a real scene around the vehicle captured by an imaging device such as a camera, or may be a virtual image of the surroundings of the vehicle reproduced using CG (computer graphics). In the case of an image of a real scene, the image may be the captured image, or may be an image obtained by processing the captured image. For example, the image may be an image obtained by synthesizing images captured by a plurality of cameras, or may be an image obtained by viewpoint conversion.
Regarding "display, in association with a driving operation to avoid approaching an obstacle or a marking line around the vehicle, a screening image . . . ," the screening image may be displayed at the timing when the driving operation to avoid approaching the obstacle or the marking line is performed, immediately before the driving operation to avoid approaching the obstacle or the marking line is performed, or after the driving operation to avoid approaching the obstacle or the marking line is performed.

### Effects of the Invention

With the driving assistance device according to the present invention having the above configuration, the user can intuitively grasp that the driving operation to avoid the obstacle or the marking line through the autonomous driving assistance is performed by displaying the screening image between the host vehicle and the obstacle or the marking line in association with the driving operation to avoid the obstacle or the marking line through the autonomous driving assistance. As a result, the user is not confused even when the driving operation to avoid the obstacle or the marking line is performed automatically.

### BRIEF DESCRIPTION OF THE DRAWINGS

[FIG. 1] FIG. 1 is a schematic configuration diagram of a vehicle according to a first embodiment.
[FIG. 2] FIG. 2 is a block diagram showing the configuration of a driving assistance device according to the first embodiment.
[FIG. 3] FIG. 3 is a flowchart of a driving assistance processing program according to the first embodiment.
[FIG. 4] FIG. 4 is a diagram illustrating a method for converting a captured image into an overhead view image.
[FIG. 5] FIG. 5 is a diagram illustrating a method for generating the overhead view image.
[FIG. 6] FIG. 6 is a diagram showing an example of an assistance image displayed on a liquid crystal display.
[FIG. 7] FIG. 7 is a diagram showing an example of disposition of an object image relative to a detected obstacle.
[FIG. 8] FIG. 8 is a diagram showing locations where object images are to be disposed in a bird's-eye view image.
[FIG. 9] FIG. 9 is a diagram showing the relationship between an object image and a virtual light source.
[FIG. 10] FIG. 10 is a diagram showing a modification of the object image.
[FIG. 11] FIG. 11 is a diagram showing an example of the assistance image displayed on the liquid crystal display when a steering operation to avoid an obstacle is not being performed.
[FIG. 12] FIG. 12 is a diagram showing an example in which the exterior of the object image is deformed.
[FIG. 13] FIG. 13 is a diagram illustrating a method for setting a range in which the exterior of the object image is deformed.
[FIG. 14] FIG. 14 is a diagram showing an example of the assistance image displayed on the liquid crystal display when the steering operation to avoid the obstacle is performed.
[FIG. 15] FIG. 15 is a flowchart of a driving assistance processing program according to a second embodiment.
[FIG. 16] FIG. 16 is a diagram illustrating a virtual viewpoint of a bird's-eye view image.
[FIG. 17] FIG. 17 is a diagram showing an example of the bird's-eye view image generated at the position of the virtual viewpoint shown in FIG. 16.
[FIG. 18] FIG. 18 is a diagram illustrating the moved virtual viewpoint of the bird's-eye view image.
[FIG. 19] FIG. 19 is a diagram showing an example of the bird's-eye view image generated at the position of the virtual viewpoint shown in FIG. 18.
[FIG. 20] FIG. 20 is a diagram illustrating a viewing radius and a viewing angle of the virtual viewpoint.
[FIG. 21] FIG. 21 is a diagram showing an example of the bird's-eye view image displayed after the viewing radius and the viewing angle are changed.
[FIG. 22] FIG. 22 is a diagram showing an example of the bird's-eye view image displayed on the liquid crystal display when a driving operation to avoid approaching an obstacle is performed.
[FIG. 23] FIG. 23 is a diagram illustrating a method for generating a screening image.
[FIG. 24] FIG. 24 is a diagram showing an example of the bird's-eye view image displayed when the screening image is not drawn such that the shape of the screening image conforms to the shape of a host vehicle image.
[FIG. 25] FIG. 25 is a diagram showing an example of the bird's-eye view image displayed when the screening image is drawn such that the shape of the screening image conforms to the shape of the host vehicle image.
[FIG. 26] FIG. 26 shows an example in which a screening image taller than the host vehicle image is displayed.
[FIG. 27] FIG. 27 shows an example in which a screening image shorter than the host vehicle image is displayed.
[FIG. 28] FIG. 28 is a diagram illustrating a modification.
[FIG. 29] FIG. 29 is a diagram illustrating a modification.

### MODES FOR CARRYING OUT THE INVENTION

A first embodiment and a second embodiment of a driving assistance device according to the present invention will be described in detail below with reference to the drawings.

### [First Embodiment]

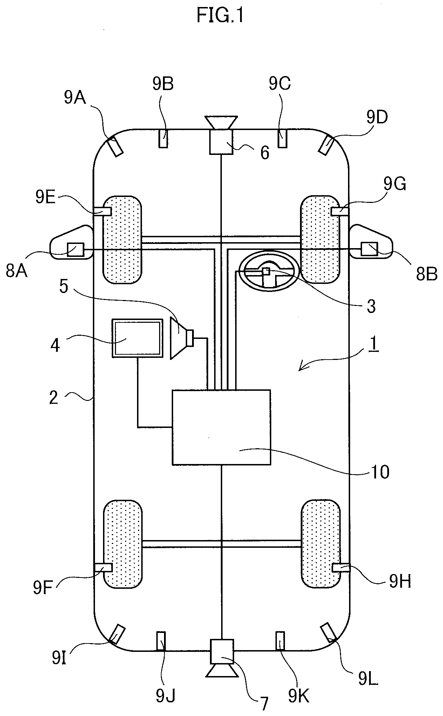

First, a vehicle 2 equipped with a driving assistance device 1 according to the first embodiment will be described below. FIG. 1 is a schematic configuration diagram of the vehicle 2 according to the first embodiment.

The vehicle 2 may be, for example, an automobile (internal combustion engine automobile) using an internal combustion engine (engine etc.) as a drive source, or an automobile (battery electric vehicle, fuel cell electric vehicle, etc.) using an electric motor (motor etc.) as a drive source, or an automobile (hybrid electric vehicle) using both as drive sources. The vehicle type is not limited. The vehicle may be a standard car, a large-size commercial truck, a bus, construction machinery, etc. In the following description, the vehicle is a four-wheeled vehicle, but may be a two-wheeled or three-wheeled vehicle.

The vehicle 2 is a vehicle that can perform manual driving in which the vehicle travels based on user's driving operations, and assisted driving through autonomous driving assistance in which the vehicle travels automatically without the user's driving operations.

The autonomous driving assistance may be performed only in a specific situation such as a situation in which the vehicle is parked or leaves a parking space, may be performed for all road sections, or may be performed only while the vehicle is traveling in a specific road section (e.g., an expressway with a gate (either manned or unmanned, toll or free) at the boundary). In the following description, the autonomous driving sections in which the autonomous driving assistance is performed on the vehicle include parking lots in addition to all road sections including public roads and expressways, and the autonomous driving assistance is performed only in a situation in which the user selects the autonomous driving assistance (e.g., by turning on an autonomous driving start button) and determination is made that the traveling through the autonomous driving assistance is possible. The vehicle 2 may be a vehicle that can perform only the assisted driving through the autonomous driving assistance. Alternatively, without being triggered by the user's selection, the autonomous driving assistance may be performed when an obstacle (e.g., a person, a bicycle, another vehicle, or a wall) is detected within a target assistance area set in a space ahead of the vehicle 2, such that a steering or braking operation to avoid the obstacle is performed as assistance (safety device) to the driver against the obstacle.

In the vehicle control in the autonomous driving assistance of the first embodiment, for example, a current position of the vehicle, a traveling lane of the vehicle, and positions of surrounding obstacles are detected at any time, and vehicle control on a steering system, a drive source, and a braking system is automatically performed such that the vehicle travels along a generated traveling trajectory at a speed in accordance with a generated speed plan. Only the steering operation may be performed automatically, and the drive source and the braking system may be controlled manually. The autonomous driving assistance for the vehicle in the first embodiment also includes lane departure prevention assistance. When a marking line (e.g., a center line of a road, a lane boundary line, an outer line of a road, or a parking space line) is detected around the vehicle 2, the autonomous driving assistance such as a steering or braking operation is performed to avoid departing from the marking line. When performing the above autonomous driving assistance, a scene around the vehicle (that may be either a real scene or a virtual CG scene) is displayed on an in-vehicle display as described later. When an obstacle is present around the vehicle, an object image indicating the presence of the obstacle is superimposed on the position of the obstacle within the scene.

As shown in FIG. 1, the vehicle 2 includes an operation unit 3 that receives operations from an occupant, a liquid crystal display 4 that displays, for the occupant, a bird's-eye view image and an overhead view image of an area around the vehicle and other information related to driving assistance, a speaker 5 that outputs audio guidance related to driving assistance, a front camera 6, a rear camera 7, and side cameras 8A, 8B for capturing images of the area around the vehicle, ultrasonic sensors 9A to 9L that detect obstacles around the vehicle, and a driving assistance ECU (electronic control unit) 10 that performs various types of arithmetic processing based on input information. The driving assistance ECU 10 is included in the driving assistance device 1.

Each component of the vehicle 2 will be described below. First, the operation unit 3 is disposed, for example, on the front side of a steering wheel, and includes operation buttons etc. that are operated when starting the autonomous driving assistance. By operating the operation unit 3, the user can switch the manual driving in which the vehicle travels based on the user's driving operations and the assisted driving through the autonomous driving assistance in which the vehicle travels automatically without the user's driving operations. The operation unit 3 may include a touch panel provided on the front side of the liquid crystal display 4. The operation unit 3 may also include a microphone and a voice recognition device.

The liquid crystal display 4 is a type of display device that is attached to an instrument panel of the vehicle 2 and displays a bird's-eye view image and an overhead view image of an area around the vehicle that are generated by performing viewpoint conversion and synthesis processing on images captured by the front camera 6, the rear camera 7, and the side cameras 8A, 8B during the autonomous driving assistance. When an obstacle is present around the vehicle 2, an object image showing a three-dimensional shape is also displayed at the position of the obstacle within the bird's-eye view image. The object image will be described in detail later. The liquid crystal display 4 may also be used for a navigation device.

The speaker 5 is attached to the instrument panel of the vehicle 2 and outputs voice guidance and warning sounds related to driving assistance. The speaker 5 may also be used for the navigation device.

The front camera 6 is an imaging device including a camera using a solid-state imaging element such as a CCD, and is installed, for example, above a front bumper of the vehicle 2 or on the back side of a rearview mirror with its optical axis oriented forward in a traveling direction of the vehicle.

The rear camera 7 is similarly an imaging device including a camera using a solid-state imaging element such as a CCD, and is installed, for example, near the upper center of a license plate attached to the rear of the vehicle 2 with its optical axis oriented rearward from the vehicle.

Each of the side cameras 8A, 8B is similarly an imaging device including a camera using a solid-state imaging element such as a CCD, and is installed, for example, on the left or right side mirror of the vehicle 2 with its optical axis oriented laterally from the vehicle.

The driving assistance ECU 10 generates a bird's-eye view image and an overhead view image of an area around the vehicle by performing viewpoint conversion and synthesis processing on images captured by the front camera 6, the rear camera 7, and the side cameras 8A, 8B. During the autonomous driving assistance, image recognition processing is performed on the captured images to detect marking lines and obstacles (other vehicles, pedestrians, bicycles, walls, guardrails, and other structures) around the vehicle, and the autonomous driving assistance is performed based on the detection results.

The ultrasonic sensors 9A to 9L are disposed at predetermined intervals at the front, rear and sides of the vehicle, and transmit ultrasonic waves as search waves to the surroundings of the vehicle 2 and receive the transmitted search waves reflected by objects around the vehicle, thereby detecting the objects that reflect the search waves. Specifically, the ultrasonic sensor is a type of distance sensor that can detect a distance (measured distance value) to an object that reflects the search wave by measuring the period from transmission to reception. Each of the ultrasonic sensors 9A to 9L is configured to generate an output signal (including the distance to the detected object) corresponding to the reception result of the received wave and output the signal to a control unit. The objects to be detected by the ultrasonic sensors 9A to 9L include obstacles that the vehicle 2 needs to avoid when traveling, such as people, bicycles, other vehicles, and walls. As the distance sensor, a millimeter wave sensor or a laser sensor may be used instead of the ultrasonic sensor. In the first embodiment, as described above, obstacles can also be detected by performing image recognition on the images captured by the front camera 6, the rear camera 7, and the side cameras 8A, 8B. Therefore, when obstacle detection is performed by the above cameras, the ultrasonic sensors 9A to 9L may be omitted.

The driving assistance ECU 10 is an electronic control unit that performs various processes related to the autonomous driving assistance. For example, a current position of the vehicle, a traveling lane of the vehicle, and positions of surrounding obstacles are detected at any time, and vehicle control on the steering system, the drive source, and the braking system is performed such that the vehicle travels along a generated traveling trajectory at a speed in accordance with a generated speed plan. A scene around the vehicle (that may be either a real scene or a virtual CG scene) is displayed on the liquid crystal display 4. When an obstacle is present around the vehicle, an object image indicating the presence of the obstacle is superimposed on the position of the obstacle within the scene. The driving assistance ECU 10 is connected to the operation unit 3, the liquid crystal display 4, the speaker 5, the front camera 6, the rear camera 7, the side cameras 8A, 8B, and the ultrasonic sensors 9A to 9L described above via an in-vehicle network such as a CAN. The driving assistance ECU 10 is also connected to various sensors such as a vehicle speed sensor, an acceleration sensor, and a steering sensor mounted on the vehicle 2 and to the navigation device that is an in-vehicle device. The detailed configuration of the driving assistance ECU 10 will be described later.

The vehicle 2 includes basic components as the vehicle 2 in addition to the components shown in FIG. 1, but description will be given of only the configuration related to the control on the autonomous driving assistance and the control related to that configuration.

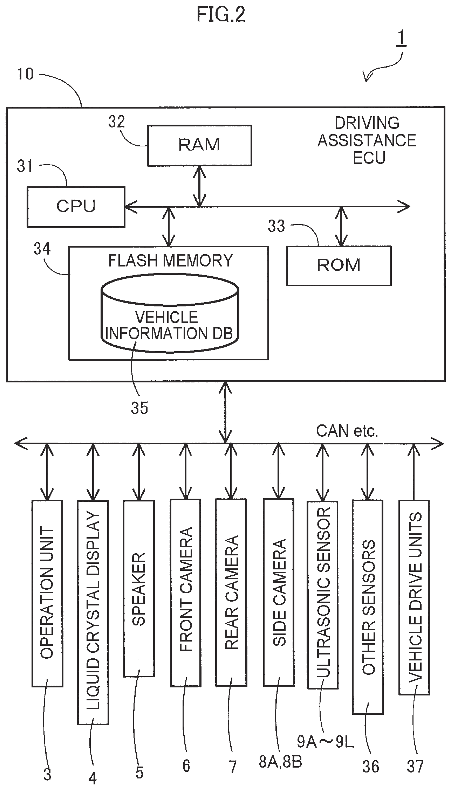

Next, the driving assistance device 1 provided in the vehicle 2, in particular, the driving assistance ECU 10, will be described in detail. FIG. 2 is a block diagram showing the configuration of the driving assistance device 1 according to the first embodiment.

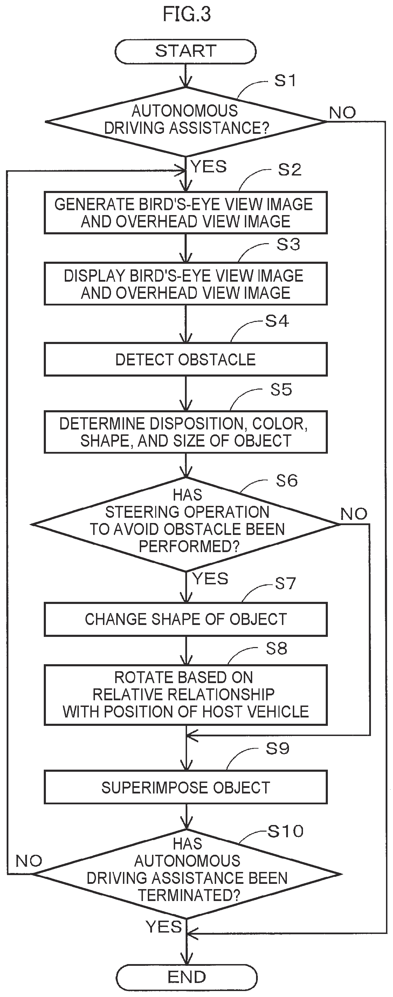

As shown in FIG. 2, the driving assistance ECU (electronic control unit) 10 is an electronic control unit that performs overall control on the driving assistance device 1, and includes a CPU 31 serving as an arithmetic device and a control device, and internal storage devices such as a RAM 32 that is used as a working memory when the CPU 31 performs various types of arithmetic processing and stores route data etc. when a route search is made, a ROM 33 that stores control programs and a driving assistance processing program (see FIG. 3) described later, and a flash memory 34 that stores programs read from the ROM 33. The driving assistance ECU 10 has various functions as processing algorithms. For example, the functions include a function to detect an obstacle around the vehicle, a function to superimpose an object image around an obstacle detected around the vehicle, a function to automatically control at least part of the vehicle operation, a function to, when the vehicle is operated to avoid an obstacle by autonomous driving control means, change the shape of an object image displayed around the obstacle to be avoided, and a function to determine a deformation range of the outer peripheral surface of the displayed object image.

The driving assistance ECU 10 is connected to various sensors 36 for detecting the behavior of the vehicle, such as the vehicle speed sensor, the acceleration sensor, and the steering sensor, and vehicle drive units 37 such as the steering system, the braking system, and an accelerator. The driving assistance ECU 10 performs the autonomous driving assistance on the vehicle 2 by detecting the current behavior of the vehicle based on the detection results from the sensors 36 and controlling the drive units 37. Specific details of the autonomous driving assistance include, for example, detecting a current position of the vehicle, a traveling lane of the vehicle, and positions of surrounding obstacles at any time, and performing vehicle control on the steering system, the drive source, and the braking system such that the vehicle travels along a generated traveling trajectory at a speed in accordance with a generated speed plan. Only the steering operation may be performed automatically, and the drive source and the braking system may be controlled manually.

The flash memory 34 includes a vehicle information DB 35. The vehicle information DB 35 stores various types of information related to the vehicle 2. For example, installation positions (heights from the ground surface, lateral positions) and detection axes X of the cameras and the ultrasonic sensors 9A to 9L installed on the vehicle 2, an overall length, a vehicle width, a wheelbase, and a minimum turning radius are stored. These pieces of information are input in advance by an occupant or a person of a vehicle manufacturer.

Next, the driving assistance processing program executed by the driving assistance ECU 10 in the driving assistance device 1 having the above configuration will be described with reference to FIG. 3. FIG. 3 is a flowchart of the driving assistance processing program according to the first embodiment. The driving assistance processing program is a program that is executed after an ACC power supply (accessory power supply) of the vehicle 2 is turned on and assists the user with a bird's-eye view image and an overhead view image of an area around the vehicle while the autonomous driving assistance is being performed on the vehicle. The program shown in the flowchart of FIG. 3 is stored in the RAM 32 or the ROM 33 of the driving assistance device 1 and is executed by the CPU 31.

First, in step (hereinafter abbreviated as S) 1, the CPU 31 determines whether the assisted driving through the autonomous driving assistance is being performed. In the first embodiment, the assisted driving through the autonomous driving assistance is performed in a situation in which the user selects the autonomous driving assistance by operating the operation unit 3 and determination is made that the traveling through the autonomous driving assistance is possible. Details of the autonomous driving assistance include detecting a current position of the vehicle, a traveling lane of the vehicle, and positions of surrounding marking lines or obstacles at any time, and automatically performing vehicle control on the steering system, the drive source, and the braking system such that the vehicle travels along a generated traveling trajectory at a speed in accordance with a generated speed plan. Only the steering operation may be performed automatically, and the drive source and the braking system may be controlled manually.

When determination is made that the assisted driving through the autonomous driving assistance is being performed (S1: YES), the process proceeds to S2. When determination is made that the assisted driving through the autonomous driving assistance is not being performed (S1: NO), the driving assistance processing program is terminated.

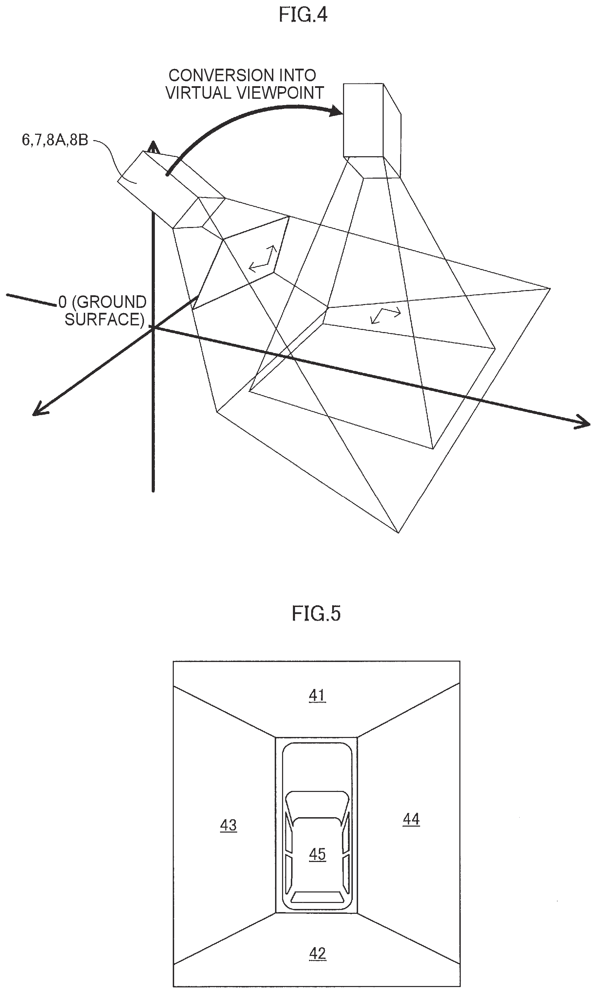

In S2, the CPU 31 generates a bird's-eye view image that is an obliquely downward view of the area around the vehicle from the sky, and an overhead view image that is a vertically downward view of the area around the vehicle from the sky based on real-time images captured by the front camera 6, the rear camera 7, and the side cameras 8A, 8B. As an example, a method for generating the overhead view image will be described below. As shown in FIG. 4, a real-time image captured by each camera is projected onto a virtual projection plane that is a horizontal plane corresponding to the height of the ground surface, and the captured image projected onto the virtual projection plane is converted into an image viewed from a virtual viewpoint above the vehicle 2 in a vertically downward direction, thereby generating the overhead view image of each camera. The conversion into the image viewed from the virtual viewpoint (viewpoint conversion) is performed by first converting coordinates in a captured image coordinate system set along a plane perpendicular to the optical axis of the camera into coordinates in a ground coordinate system set along the ground surface, and then converting them into coordinates in an overhead view image coordinate system. The conversion formulas used for each coordinate conversion are already known, and therefore description thereof will be omitted. Then, as shown in FIG. 5, an overhead view image 41 obtained by viewpoint conversion of the image captured by the front camera 6, an overhead view image 42 obtained by viewpoint conversion of the image captured by the rear camera 7, an overhead view image 43 obtained by viewpoint conversion of the image captured by the side camera 8A, and an overhead view image 44 obtained by viewpoint conversion of the image captured by the side camera 8B are synthesized (spliced together), and a host vehicle image 45 that schematically shows the exterior of the host vehicle is inserted between the overhead view images 41 to 44. In this way, the overhead view image is generated. The process for generating the bird's-eye view image is basically the same as the process for generating the overhead view image, except that the angle of the line of sight for viewpoint conversion is different. Therefore, description thereof will be omitted. When the bird's-eye view image is a bird's-eye view image that is an obliquely downward view of an area ahead in the traveling direction, the overhead view image 42 obtained by viewpoint conversion of the image captured by the rear camera 7 may be excluded from the synthesis target (i.e., the image may only be an image of the area ahead of the vehicle position in the traveling direction). When the bird's-eye view image is a bird's-eye view image that is an obliquely downward view of an area behind the vehicle during the traveling in reverse, the overhead view image 41 obtained by viewpoint conversion of the image captured by the front camera 6 may be excluded from the synthesis target (i.e., the image may only be an image of the area behind the vehicle position).

Then, in S3, the CPU 31 displays, on the liquid crystal display 4, the real-time bird's-eye view image and the real-time overhead view image that are generated in S2 and show the current environment around the vehicle. In the first embodiment, both the bird's-eye view image and the overhead view image are displayed simultaneously on the liquid crystal display 4, but only one of the images may be displayed or the images may be displayed in a switchable manner by the user's operation.

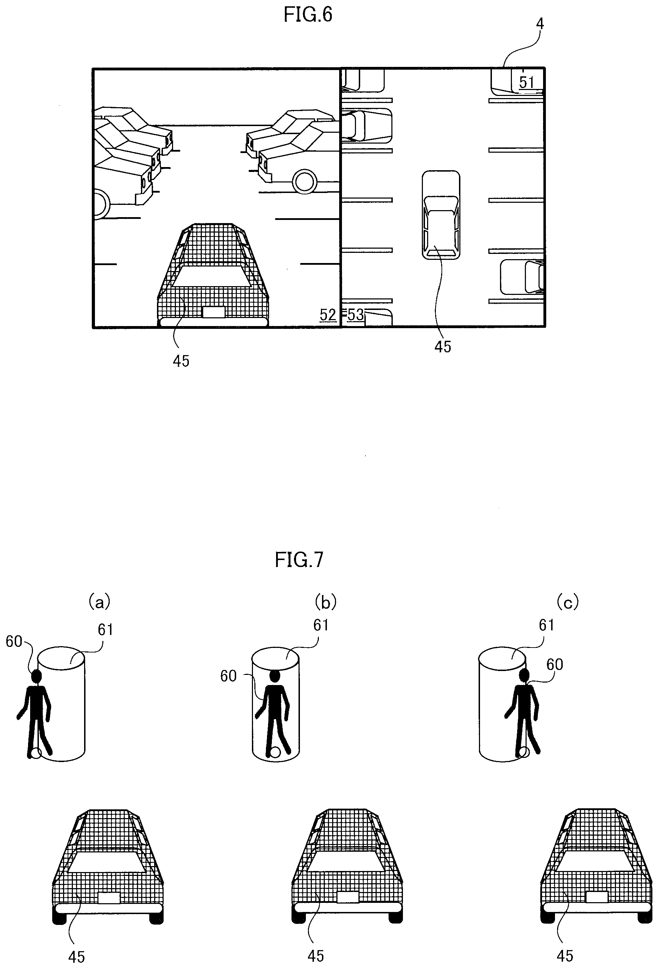

FIG. 6 is a diagram showing an example of an assistance image 51 displayed on the liquid crystal display 4 in S3. As shown in FIG. 6, the assistance image 51 is divided into two screens on the left and right, with a bird's-eye view image 52 displayed on the left and an overhead view image 53 displayed on the right. FIG. 6 particularly shows a case where the vehicle is moving forward, and the displayed bird's-eye view image 52 is a bird's-eye view image that is an obliquely downward view of an area ahead in the traveling direction. Further, each of the bird's-eye view image 52 and the overhead view image 53 displays the host vehicle image 45 that schematically shows the host vehicle. The host vehicle image 45 shows the current position of the vehicle in the bird's-eye view image 52 or the overhead view image 53. As a result, the user can grasp the environment around the vehicle by clarifying the relative relationships with the position of the host vehicle, including areas that are difficult to view directly. The CPU 31 may calculate a future movement trajectory of the vehicle based on the detection values from the vehicle speed sensor, the steering sensor, etc., and superimpose the movement trajectory on each of the bird's-eye view image 52 and the overhead view image 53. Then, the assistance image 51 is continuously displayed until the assisted driving through the autonomous driving assistance is terminated (S10: YES).

Next, in S4, the CPU 31 detects an obstacle around the vehicle. When an obstacle is present, the position of the obstacle and the range of the obstacle in each of the bird's-eye view image and the overhead view image generated in S2 are also detected. The obstacle is an object that the vehicle needs to avoid when traveling, such as other vehicles, pedestrians, bicycles, walls, guardrails, and other structures. Passable steps etc. are excluded. The obstacle may be detected by performing image recognition on the images captured by the front camera 6, the rear camera 7, and the side cameras 8A, 8B, may be detected by the ultrasonic sensors 9A to 9L, or may be detected by using both. The process for detecting the obstacle from the captured image can include, for example, performing brightness correction based on a brightness difference between a road surface and the obstacle on the road surface, and then performing binarization processing to separate the obstacle from the image, geometric processing to correct distortion, smoothing processing to remove noise from the image, etc. to detect the boundary between the road surface and the obstacle. The type of the obstacle may also be detected using known template matching processing, known feature point detection processing, etc. Further, the image recognition processing for the captured image is not limited to the above example, and may be performed using, for example, machine learning. When no obstacle is detected in S4, the process proceeds to S10 without performing the process in S5 onwards.

Next, in S5, the CPU 31 determines the disposition, color, shape, and size of an object image to be superimposed particularly on the bird's-eye view image out of the bird's-eye view image and the overhead view image generated in S2. The object image is an image showing the position of the obstacle in the bird's-eye view image, and specifically, is an image of a three-dimensional (3D) pole standing on the road surface. In the first embodiment, the object image is superimposed only on the bird's-eye view image, but the object image may also be superimposed on the overhead view image.

First, the "disposition of object image" is determined based on the position of the obstacle in the bird's-eye view image that is detected in S4. Specifically, as shown in (a) of FIG. 7, the edge of an object image 61 may be located at the position of an obstacle 60 detected in the bird's-eye view image in S4, and the object image 61 may be disposed closer to the host vehicle position than the obstacle 60. Alternatively, as shown in (b) of FIG. 7, the object image 61 may be disposed near the center of the position of the obstacle 60 detected in the bird's-eye view image in S4. Alternatively, as shown in (c) of FIG. 7, the edge of the object image 61 may be located at the position of the obstacle 60 detected in the bird's-eye view image in S4, and the object image 61 may be disposed opposite to the host vehicle position across the obstacle 60. In order that the occupant be more aware of the obstacle 60, the pattern of (a) is desirable.

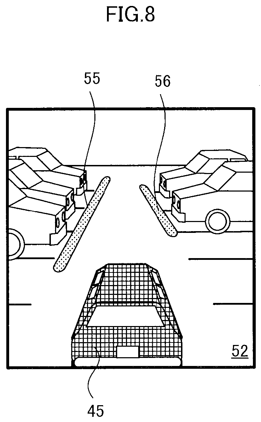

The example of the pattern of (a) will be described below. In the bird's-eye view image, an area near the boundary between the area occupied by the obstacle detected in S4 and the area where the vehicle is traveling (road or passage) is determined as a location where the object image is to be disposed. For example, in the bird's-eye view image 52 shown in FIG. 8, the vehicle is traveling along a passage in a parking lot. In this situation, parked vehicles on the left ahead of the vehicle and parked vehicles on the right ahead of the vehicle are included as obstacles. Therefore, a line segment 55 that is the boundary between the parked vehicles on the left ahead and the passage and a line segment 56 that is the boundary between the parked vehicles on the right ahead and the passage are determined as the locations where the object images are to be disposed. The object images are disposed on the determined line segments at predetermined intervals (e.g., intervals of 30 cm) to surround the obstacles.

Next, regarding the "color of object image," for example, all the object images may be determined to have the same color (e.g., green), but the color of the object image is desirably changed depending on the distance from the vehicle. For example, object images within a predetermined distance from the vehicle are determined in red or flashing color because they show obstacles to which the user should pay particular attention, and the other object images are determined in green. In the first embodiment, a process (S7) of changing the shape of the object image displayed around the obstacle to be avoided is performed as described later. The object image with the changed shape may be determined in red or flashing color, and the other object images may be determined in green. The transparency is also determined. In order to prevent the obstacle from being obscured by the object image, the transparency is set to a "semi-transparent" level (e.g., transparency of 50%). For object images within a predetermined distance from the vehicle or object images with changed shapes, the transparency may be reduced (e.g., 20%) because they show obstacles to which the user should pay particular attention.

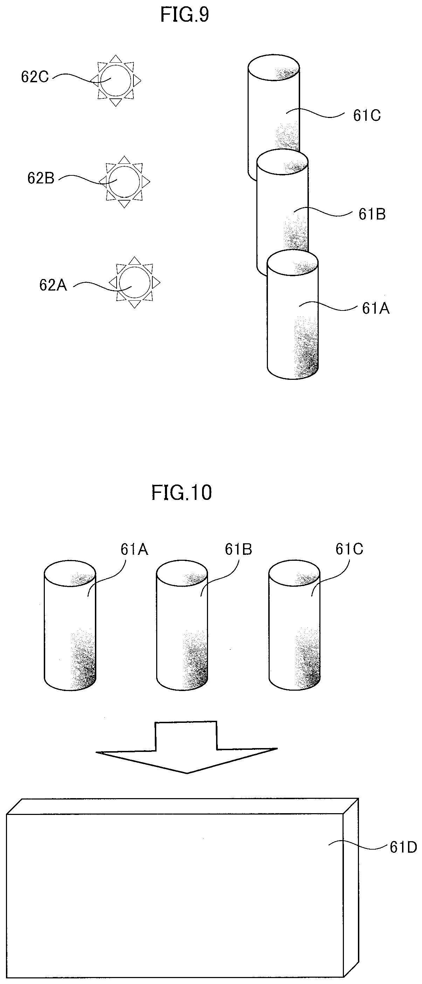

For object images, a texture is applied to the surface to represent the texture of an object surface. Regarding the position of the virtual light source that determines the brightness of the texture surface, a single common light source is not set for all the object images, but different light sources are set for the individual object images. For example, when object images 61A to 61C are arranged as shown in FIG. 9, a virtual light source 62A is set for the object image 61A, a virtual light source 62B is set for the object image 61B, and a virtual light source 62C is set for the object image 61C. The setting is basically made such that the light impinges on the side. For example, when a single virtual light source is set for the plurality of object images 61A to 61C and the plurality of object images 61A to 61C is arranged as shown in FIG. 9, a problem arises in that there is an object image that cannot represent the texture because the light does not sufficiently impinge on the object image. In the first embodiment, however, such a problem can be prevented because virtual light sources are set for the individual object images.

The light intensity of the virtual light source may be changed over time. For example, a realistic representation with a high-intensity light source and an abstract representation with a low-intensity light source can be alternately displayed at predetermined time intervals. This prevents the user from misjudging the object image as an actual structure.

Next, the "shape of object image" is basically a pole (columnar) shape as shown in FIG. 9. However, the shape of the object image is not limited to the pole shape, and may be, for example, a rectangular parallelepiped shape or a cone shape. In the first embodiment, the object images are the plurality of object images 61A to 61C disposed at predetermined intervals (e.g., intervals of 30 cm) to surround the obstacles, but may be, for example, a single continuous wall-shaped object image 61D as shown in FIG. 10. When the wall-shaped object image 61D is used, the object image 61D is disposed to surround the obstacles.

Finally, the "size of object image" is set as appropriate without impairing the user's visibility. For example, when the object image has a pole (columnar) shape as shown in FIG. 9, the pole has a diameter of 30 cm and a height of 1 m (size in the real scene instead of the size on the screen). Although the object images have the same size, the size of the object image disposed on the near side (closer to the vehicle) is determined to be larger in terms of the appearance on the screen. That is, the size of the object image displayed in the bird's-eye view image on the screen is determined depending on the position where the object image is disposed.

When the type of the obstacle can be detected, the color, shape, size, etc. of the object image around the obstacle may be changed depending on the type of the obstacle. For example, for an obstacle with a greater risk (e.g., a pedestrian), the object image around the obstacle can be made thicker or flashing to become prominent.

Then, in S6, the CPU 31 acquires details of control performed in the autonomous driving assistance process that is being performed in parallel with this program (what type of autonomous driving assistance is performed in what situation), and determines whether a steering operation to avoid the obstacle through the autonomous driving assistance is performed in particular. Regarding the steering operation, the condition may be that the steering operation is performed at a threshold angle or more or at a threshold speed or more.

When determination is made that the steering operation to avoid the obstacle is performed (S6: YES), the process proceeds to S7. When determination is made that the steering operation to avoid the obstacle is not performed (S6: NO), the process proceeds to S9.

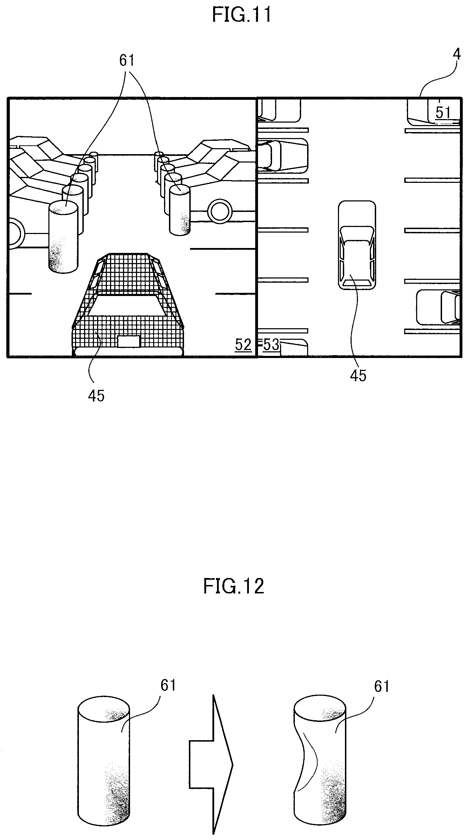

In S9 to be performed when determination is made that the steering operation to avoid the obstacle is not performed, the CPU 31 superimposes the object image with the disposition, color, shape, and size determined in S5 on the bird's-eye view image 52 displayed on the liquid crystal display 4 in S3. As a result, for example, in the bird's-eye view image 52 shown in FIG. 11, the vehicle is traveling along a passage in a parking lot. In this situation, parked vehicles on the left ahead of the vehicle and parked vehicles on the right ahead of the vehicle are included as obstacles. Therefore, the object images 61 are superimposed on the boundary between the parked vehicles on the left ahead and the passage, and the object images 61 are similarly superimposed on the boundary between the parked vehicles on the right ahead and the passage. The object images 61 are disposed at predetermined intervals (e.g., intervals of 30 cm) to surround the obstacles in the bird's-eye view image 52. As a result, the user who views the assistance image 51 can clearly grasp the presence of the obstacles, including the positions relative to the host vehicle. In the example shown in FIG. 11, the object images 61 are superimposed only on the bird's-eye view image 52, but the object images may be similarly superimposed on the overhead view image 53. Then, the process proceeds to S10.

In S7, the CPU 31 changes the shape of the object image to be displayed around the obstacle avoided by the steering operation. Specifically, as shown in FIG. 12, the shape is changed by recessing part of the outer peripheral surface of the object image 61 showing the three-dimensional shape. The width of the recessing range and the recessing amount (depth) may be fixed or may be changed depending on the amount and speed of the steering operation. For example, the object image is recessed more widely and deeply as the angle of the steering operation to avoid the obstacle increases or as the speed of the steering operation increases. When the object image is recessed, the object image is desirably made thicker (e.g., 1.2 times in diameter) to prevent the object image from becoming extremely thin due to the recessing. When the object image is recessed, the object image is desirably deformed such that it is gradually recessed, rather than switching from the non-recessed state to the recessed state at a time. The recessing range of the outer peripheral surface of the object image (recessing direction) is adjusted in S8 described later, and is therefore set to a fixed range in S7.

Next, in S8, the CPU 31 rotates, about the central axis, the object image displayed around the obstacle avoided by the steering operation. Therefore, the recessing range of the outer peripheral surface of the object image (recessing direction) is adjusted (i.e., the deformation range of the outer peripheral surface is determined depending on the degree of rotation).

In the first embodiment, the recessing range of the outer peripheral surface is changed along with a change in positional relationship between the vehicle and the object image. Specifically, the criteria for determining the recessing range of the outer peripheral surface are different between the object image located ahead of the current position of the vehicle in the traveling direction and the object image located behind the current position of the vehicle in the traveling direction.

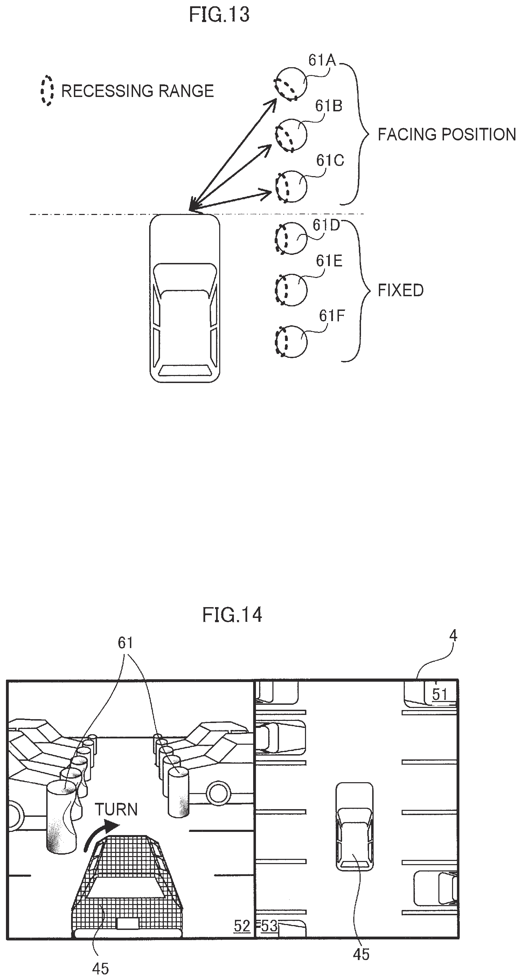

In the example shown in FIG. 13, for each of the object images 61A to 61C located ahead of the current position of the vehicle in the traveling direction (more precisely, the front end of the vehicle during forward movement and the rear end during backward movement), determination is made to recess the surface facing the vehicle (more precisely, the central front end of the vehicle during forward movement and the central rear end during backward movement), and the object image is rotated in accordance with the determination. Therefore, when the position of the vehicle changes, the recessing range of each of the object images 61A to 61C also changes accordingly. For each of object images 61D to 61F located behind the current position of the vehicle in the traveling direction, determination is made to recess a fixed range (e.g., the surface opposite to the obstacle) regardless of the position of the vehicle, and the object image is rotated in accordance with the determination. FIG. 13 shows the case where the vehicle moves forward.

However, the example shown in FIG. 13 is merely an example, and the criteria for determining the recessing range of the object image can be changed as appropriate. For example, determination may be made to recess a fixed range (e.g., the surface opposite to the obstacle) for all the object images on the screen regardless of the current position of the vehicle (deformation pattern 1). Alternatively, determination may be made to recess the surface facing the vehicle (more precisely, the central front end of the vehicle during forward movement and the central rear end during backward movement) for each object image on the screen (deformation pattern 2). Alternatively, determination may be made to recess the surface facing the closest vehicle portion (closest point) for each object image on the screen (deformation pattern 3). Alternatively, determination may be made to use deformation pattern 3 for the object image located ahead of the current position of the vehicle in the traveling direction (more precisely, the front end of the vehicle during forward movement and the rear end during backward movement), and to use deformation pattern 1 for the object image located behind the current position of the vehicle in the traveling direction.

Then, in S9, the CPU 31 superimposes the object image with the disposition, color, shape, and size determined in S5 on the bird's-eye view image 52 displayed on the liquid crystal display 4 in S3. For the object image displayed around the obstacle avoided by the steering operation, the object image deformed in S7 and rotated in S8 is superimposed. As a result, for example, in the bird's-eye view image 52 shown in FIG. 14, the vehicle is traveling along a passage in a parking lot. In this situation, parked vehicles on the left ahead of the vehicle and parked vehicles on the right ahead of the vehicle are included as obstacles. Therefore, the object images 61 are superimposed on the boundary between the parked vehicles on the left ahead and the passage, and the object images 61 are similarly superimposed on the boundary between the parked vehicles on the right ahead and the passage. In particular, when a steering operation to avoid the parked vehicles on the left ahead is performed in the autonomous driving assistance, the object images 61 at the boundary between the parked vehicles on the left ahead and the passage are displayed as being recessed as shown in FIG. 14. By recessing the object images 61, the user can intuitively grasp that the most recent automatic steering operation to turn right was the steering operation to avoid the parked vehicles on the left ahead. Regarding the recess in the object image 61 caused by the steering operation, the object image 61 may be returned to the non-recessed state after an elapse of a predetermined period, or may remain in the recessed state until the object image 61 disappears off the screen once the object image 61 is recessed.

Then, in S10, the CPU 31 determines whether to terminate the assisted driving through the autonomous driving assistance. The assisted driving through the autonomous driving assistance may be terminated, for example, under the condition that the user performs a predetermined termination operation on the operation unit 3, or under the condition that the shift position is changed to "P" or the engine is turned off. Alternatively, the termination condition may be that the autonomous driving assistance cannot be continued.

When determination is made that the assisted driving through the autonomous driving assistance is terminated (S10: YES), the driving assistance processing program is terminated. When determination is made that the assisted driving through the autonomous driving assistance is not terminated (S10: NO), the process returns to S2, and the assistance image is continuously displayed on the liquid crystal display 4.

In the driving assistance processing program according to the first embodiment, when an obstacle is detected around the vehicle, the object image 61 is displayed around the obstacle (S9). Even when a marking line (e.g., a center line of a road, a lane boundary line, an outer line of a road, or a parking space line) is detected instead of the obstacle, the object image 61 may be similarly displayed around the detected marking line. In the autonomous driving assistance, the steering operation to avoid departing from the marking line is performed by lane departure prevention assistance. In S6, determination may be made as to whether the steering operation to avoid departing from the marking line is performed. When determination is made that the steering operation to avoid departing from the marking line is performed, the shape of the object image 61 to be displayed around the marking line avoided by the steering operation may be changed (S7). The only difference is that the obstacle is replaced by the marking line, and the processing details are the same. Therefore, detailed description will be omitted.

As described in detail above, in the driving assistance device 1 according to the first embodiment and the computer program executed by the driving assistance device 1, an obstacle is detected around the vehicle 2 (S4), and the object image is superimposed around the obstacle detected around the vehicle 2 (S9). When the traveling through the autonomous driving assistance for automatically controlling at least part of vehicle operations on the vehicle 2 is possible and a vehicle operation to avoid the obstacle through the autonomous driving assistance is performed, the shape of the object image displayed around the avoided obstacle is changed (S7, S8). Therefore, the user can intuitively grasp that the vehicle operation is performed based on the change in shape of the object image. As a result, the user is not confused even when the vehicle operation to avoid the obstacle is performed automatically.

The object image is an image of an object showing a three-dimensional shape. The shape of the object image is changed by recessing or projecting at least part of the outer peripheral surface of the object showing the three-dimensional shape (S7). Therefore, the user can intuitively grasp that the vehicle operation is performed based on the change in shape of the object image.

The object image is an image of an object showing a three-dimensional shape. The shape of the object image is changed by deforming part of the outer peripheral surface of the object showing the three-dimensional shape. The deformation range of the outer peripheral surface is changed along with a change in positional relationship between the vehicle and the object image (S8). By changing the shape along with the change in position of the vehicle, it is possible to give an impression that the object image is deformed by the traveling of the vehicle. The user can more intuitively grasp that the vehicle operation is performed.

The criteria for determining the deformation range of the outer peripheral surface are different between the object image located ahead of the current position of the vehicle in the traveling direction and the object image located behind the current position of the vehicle in the traveling direction (S8). Therefore, when the user views the deformed object image, it is possible to give an impression that the object image is deformed more naturally by the traveling of the vehicle.

### [Summary of First Embodiment]

The first embodiment preferably has at least the following configuration:
obstacle detection means (31) for detecting an obstacle (60) around a vehicle (2);
image display means (31) for superimposing an object image (61) around the obstacle detected around the vehicle;
autonomous driving control means (31) for automatically controlling at least part of vehicle operations; and
display control means (31) for, when the autonomous driving control means performs a vehicle operation to avoid the obstacle, changing a shape of the object image displayed around the avoided obstacle.

With this configuration, the user can intuitively grasp that the vehicle operation is performed based on the change in shape of the object image. As a result, the user is not confused even when the vehicle operation to avoid the obstacle is performed automatically.

In the first embodiment, it is preferable that the object image (61) be an image of an object showing a three-dimensional shape, and
the display control means change the shape of the object image by recessing or projecting at least part of the outer peripheral surface of the object showing the three-dimensional shape.

With this configuration, the user can intuitively grasp that the vehicle operation is performed based on the change in shape of the object image.

In the first embodiment, it is preferable that the object image (61) be an image of an object showing a three-dimensional shape, and
the display control means be configured to:
change the shape of the object image by deforming part of the outer peripheral surface of the object showing the three-dimensional shape; and
change a deformation range of the outer peripheral surface along with a change in positional relationship between the vehicle and the object image.

With this configuration, by changing the shape along with the change in position of the vehicle, it is possible to give an impression that the object image is deformed by the traveling of the vehicle. The user can more intuitively grasp that the vehicle operation is performed.

In the first embodiment, it is preferable that range determination means (31) for determining the deformation range of the outer peripheral surface of the displayed object image (61) be provided,
the display control means deform the outer peripheral surface of the displayed object image in the range determined by the range determination means, and
criteria for determining the deformation range of the outer peripheral surface by the range determination means be different between the object image located ahead of a current position of the vehicle (2) in a traveling direction and the object image located behind the current position of the vehicle in the traveling direction.

With this configuration, when the user views the deformed object image, it is possible to give an impression that the object image is deformed more naturally by the traveling of the vehicle.

### [Second Embodiment]

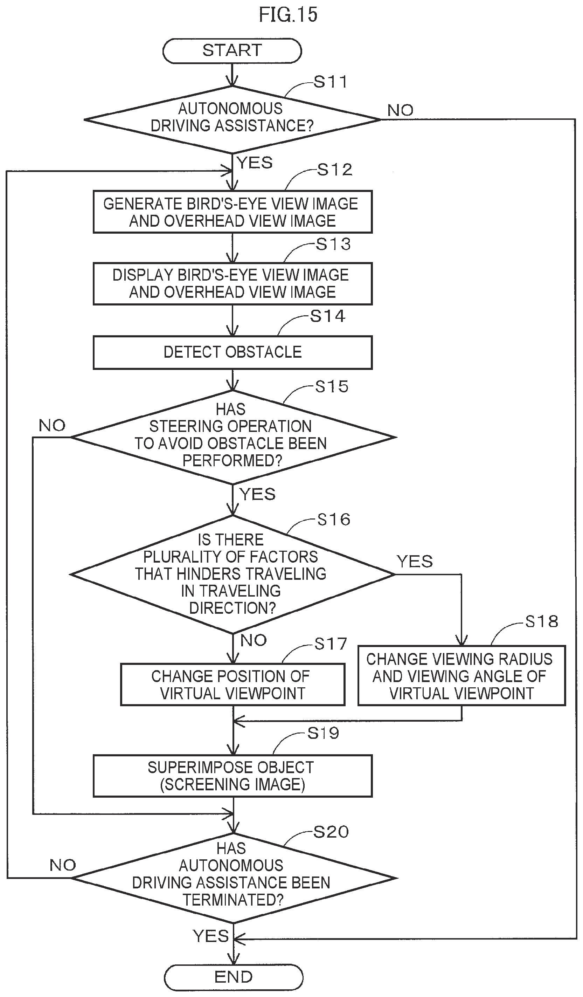

Next, a driving assistance device according to a second embodiment will be described with reference to FIGS. 15 to 27. In the following description, the same reference signs as those in the configuration of the driving assistance device 1 according to the first embodiment shown in FIGS. 1 to 14 represent portions that are the same as or correspond to those in the configuration of the driving assistance device 1 etc. according to the first embodiment.

The schematic configuration of the driving assistance device according to the second embodiment is substantially the same as the configuration of the driving assistance device 1 according to the first embodiment. Various control processes are also substantially the same as the control processes of the driving assistance device 1 according to the first embodiment.
The difference is that the driving assistance device 1 according to the first embodiment superimposes the object image 61 around an obstacle or a marking line detected around the vehicle 2, whereas the driving assistance device 1 according to the second embodiment superimposes the object image between the vehicle and an obstacle or a marking line detected around the vehicle 2. Further, the difference is that the driving assistance device 1 according to the first embodiment displays the object image 61 regardless of whether an avoidance operation to avoid approaching an obstacle or a marking line is performed, whereas the driving assistance device 1 according to the second embodiment displays the object image in association with the avoidance operation to avoid approaching an obstacle or a marking line (the timing may be when the avoidance operation is performed, after the avoidance operation is performed, or immediately before the avoidance operation is performed).

Next, a driving assistance processing program according to the second embodiment will be described with reference to FIG. 15. FIG. 15 is a flowchart of the driving assistance processing program according to the second embodiment. The driving assistance processing program is a program that is executed after the ACC power supply (accessory power supply) of the vehicle 2 is turned on and assists the user with a bird's-eye view image and an overhead view image of an area around the vehicle while the autonomous driving assistance is being performed on the vehicle. The program shown in the flowchart of FIG. 15 is stored in the RAM 32 or the ROM 33 of the driving assistance device 1 and is executed by the CPU 31.

First, in S11, the CPU 31 determines whether the assisted driving through the autonomous driving assistance is being performed. In the second embodiment, the assisted driving through the autonomous driving assistance is performed in a situation in which the user selects the autonomous driving assistance by operating the operation unit 3 and determination is made that the traveling through the autonomous driving assistance is possible. Details of the autonomous driving assistance include detecting a current position of the vehicle, a traveling lane of the vehicle, and positions of surrounding marking lines or obstacles at any time, and automatically performing vehicle control on the steering system, the drive source, and the braking system such that the vehicle travels along a generated traveling trajectory at a speed in accordance with a generated speed plan. Only the steering operation may be performed automatically, and the drive source and the braking system may be controlled manually.

When determination is made that the assisted driving through the autonomous driving assistance is being performed (S11: YES), the process proceeds to S12. When determination is made that the assisted driving through the autonomous driving assistance is not being performed (S11: NO), the driving assistance processing program is terminated.

In S12, the CPU 31 generates the bird's-eye view image 52 that is an obliquely downward view of the area around the vehicle from the sky, and the overhead view image 53 that is a vertically downward view of the area around the vehicle from the sky based on real-time images captured by the front camera 6, the rear camera 7, and the side cameras 8A, 8B. Details of the method for generating each image are the same as in S2, and therefore description thereof will be omitted.

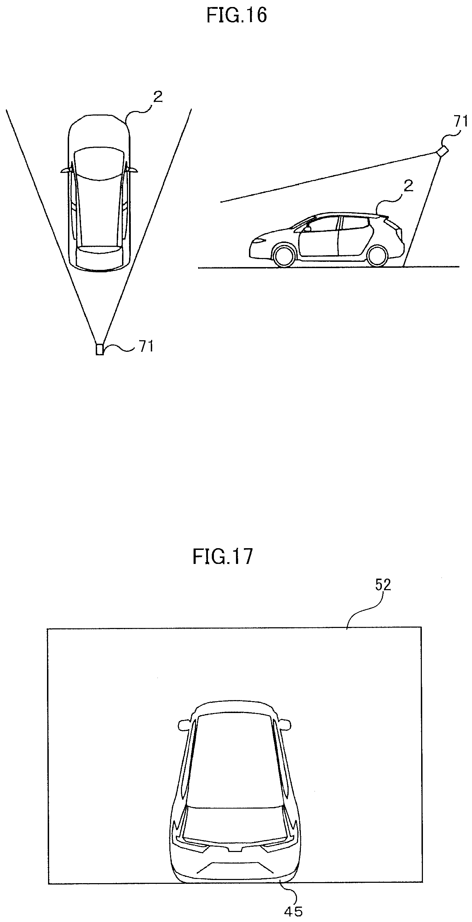

The virtual viewpoint of the bird's-eye view image 52 generated in S12 is a virtual viewpoint 71 of the obliquely downward view of the area around the vehicle from the sky as shown in FIG. 16. The position of the virtual viewpoint 71 is not always fixed relative to the vehicle 2, and the position relative to the vehicle 2 may be changed when a driving operation to avoid approaching an obstacle is performed as described later. The viewing radius and the viewing angle may be changed similarly. Details will be described later.

Then, in S13, the CPU 31 displays, as the assistance image on the liquid crystal display 4, the real-time bird's-eye view image 52 and the real-time overhead view image 53 that are generated in S12 and show the current environment around the vehicle. In the second embodiment, both the bird's-eye view image 52 and the overhead view image 53 are displayed simultaneously on the liquid crystal display 4, but only one of the images may be displayed or the images may be displayed in a switchable manner by the user's operation. Details are the same as in S3, and therefore description thereof will be omitted. Then, the bird's-eye view image 52 and the overhead view image 53 are continuously displayed until the assisted driving through the autonomous driving assistance is terminated (S20: YES).

In the bird's-eye view image 52 displayed in S13, the host vehicle image 45 showing the exterior of the vehicle is displayed at the current position of the vehicle as shown in FIG. 17. The transparency of the displayed host vehicle image 45 is desirably a "semi-transparent" level (e.g., transparency of 30%) rather than an "opaque" level. Therefore, the bird's-eye view image 52 allows the user to recognize the surrounding environment more easily. When the driving operation to avoid approaching an obstacle is performed as described later (S15: YES), the transparency of the host vehicle image 45 may be reduced to clarify the positional relationship between the vehicle and the obstacle.

Next, in S14, the CPU 31 detects an obstacle around the vehicle. When an obstacle is present, the position of the obstacle and the range of the obstacle in each of the bird's-eye view image and the overhead view image generated in S12 are also detected. The obstacle is an object that the vehicle needs to avoid when traveling, such as other vehicles, pedestrians, bicycles, walls, guardrails, and other structures. Passable steps etc. are excluded. Details are the same as in S4, and therefore description thereof will be omitted. When no obstacle is detected in S14, the process proceeds to S20 without performing the process in S15 onwards.

Then, in S15, the CPU 31 acquires details of control performed in the autonomous driving assistance process that is being performed in parallel with this program (what type of autonomous driving assistance is performed in what situation), and determines whether a steering operation that is a driving operation to avoid approaching the obstacle through the autonomous driving assistance is performed in particular. Regarding the steering operation, the condition may be that the steering operation is performed at a threshold angle or more or at a threshold speed or more.

When determination is made that the steering operation to avoid approaching the obstacle is performed (S15: YES), the process proceeds to S16. When determination is made that the steering operation to avoid approaching the obstacle is not performed (S15: NO), the process proceeds to S20 without displaying a screening image 75 described later.

Next, in S16, the CPU 31 determines whether the vehicle 2 is traveling on a road with a plurality of factors that hinders the traveling in the traveling direction based on the results of image recognition of the real-time images captured by the front camera 6, the rear camera 7, and the side cameras 8A, 8B. The factors that hinder the traveling of the vehicle 2 include, for example, a vehicle parked on the roadside, an oncoming vehicle, an electric pole, a road sign, and signage. For example, when these obstacles are present in the traveling direction of the vehicle 2 and are present within a predetermined distance along the future traveling trajectory of the vehicle, determination is made that the vehicle 2 is traveling on a road with a plurality of factors that hinders the traveling in the traveling direction.

There is a high possibility that a narrow road such as a narrow street has a plurality of factors that hinders the traveling of the vehicle 2 in the traveling direction. Therefore, determination may be made in S16 as to whether the road where the vehicle is traveling is a narrow road such as a narrow street (e.g., road width of less than 4 m). Even when the road is wider than a narrow street to allow two-way traffic but has no center line, oncoming vehicles are the factors that hinder the traveling of the vehicle 2 in the traveling direction. Therefore, determination may be made in S16 as to whether the road where the vehicle is traveling is a road with no center line. In this case, the determination in S16 can be made based on map information and the current position of the vehicle.

When determination is made that the vehicle 2 is not traveling on a road with a plurality of factors that hinders the traveling in the traveling direction (S16: NO), the process proceeds to S17. When determination is made that the vehicle 2 is traveling on a road with a plurality of factors that hinders the traveling in the traveling direction (S16: YES), the process proceeds to S18.

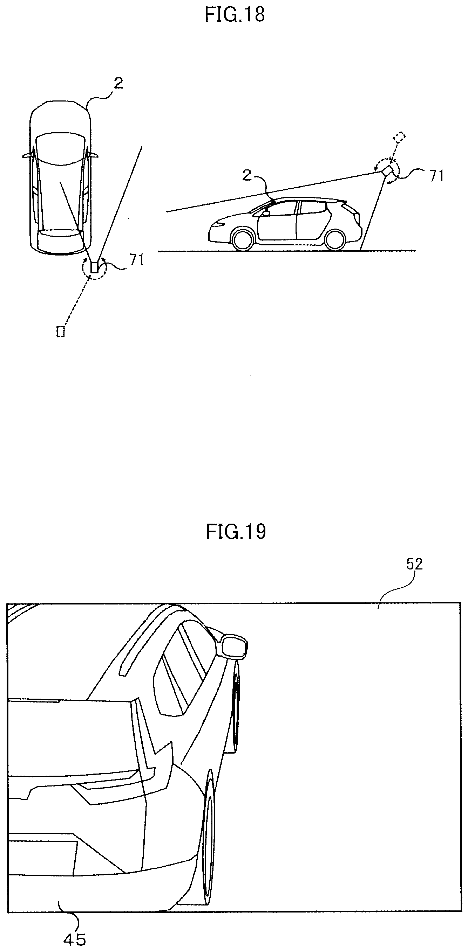

In S17, the CPU 31 moves the position of the virtual viewpoint 71 of the bird's-eye view image 52 displayed on the liquid crystal display 4. Specifically, the position of the virtual viewpoint 71 is moved closer to the vehicle and in the direction in which the avoided obstacle is present. The virtual viewpoint 71 is moved under the condition that at least both the host vehicle image 45 and an avoided obstacle 76 (it is sufficient to include at least part of them) remain displayed in the bird's-eye view image 52. The movement of the position of the virtual viewpoint 71 in S17 includes not only up-down, left-right, or front-back movement but also changing of the angle of the viewpoint (line of sight). FIG. 18 shows an example of the position of the moved virtual viewpoint 71, and in particular, shows the position to which the virtual viewpoint 71 is moved when the obstacle is detected on the right ahead of the vehicle 2. When the obstacle is detected on the right ahead of the vehicle 2 as shown in FIG. 18, the position of the virtual viewpoint 71 is moved closer to the vehicle 2 and to the right side where the obstacle is detected such that the situation on the right side of the vehicle 2 can be observed in detail. Further, the line of sight may be changed to the front left toward the vehicle 2.

As a result of changing the virtual viewpoint 71 in S17, the bird's-eye view image 52 displayed on the liquid crystal display 4 also changes. FIG. 19 is a diagram showing the bird's-eye view image 52 displayed when the position of the virtual viewpoint 71 is changed to the position shown in FIG. 18. That is, as a result of moving the virtual viewpoint 71 in S17, the bird's-eye view image 52 displayed on the liquid crystal display 4 changes from the bird's-eye view image 52 shown in FIG. 17 to the bird's-eye view image 52 shown in FIG. 19. In the bird's-eye view image 52 shown in FIG. 19, the right side of the host vehicle image 45 is displayed on an enlarged scale along with the change in position of the virtual viewpoint 71. In particular, the situation on the right side of the vehicle can be observed in detail. For ease of comparison, images other than the host vehicle image 45 are omitted in the bird's-eye view images 52 shown in FIGS. 17 and 19, but the obstacle around the vehicle is also displayed in actuality.

Although the illustration is omitted for the case where the obstacle is detected on the left ahead of the vehicle 2, the left and right are reversed from those in the example shown in FIGS. 18 and 19, and the position of the virtual viewpoint 71 is moved closer to the vehicle 2 and to the left side where the obstacle is detected such that the situation on the left side of the vehicle 2 can be observed in detail. Further, the line of sight may be changed to the front right toward the vehicle 2.

Regarding the change in display image along with the movement of the virtual viewpoint 71, the display image may be animated such that the virtual viewpoint 71 moves over time, the display image may be switched instantly, or the screen may be split to simultaneously display the virtual viewpoint 71 after the movement and the virtual viewpoint 71 before the movement. The virtual viewpoint 71 may be moved at the timing when the driving operation to avoid approaching the obstacle is performed (at the start of the driving operation), immediately before the driving operation to avoid approaching the obstacle is performed, or after the driving operation to avoid approaching the obstacle is performed (after an elapse of a predetermined period from the start of the driving operation). Then, the process proceeds to S19.

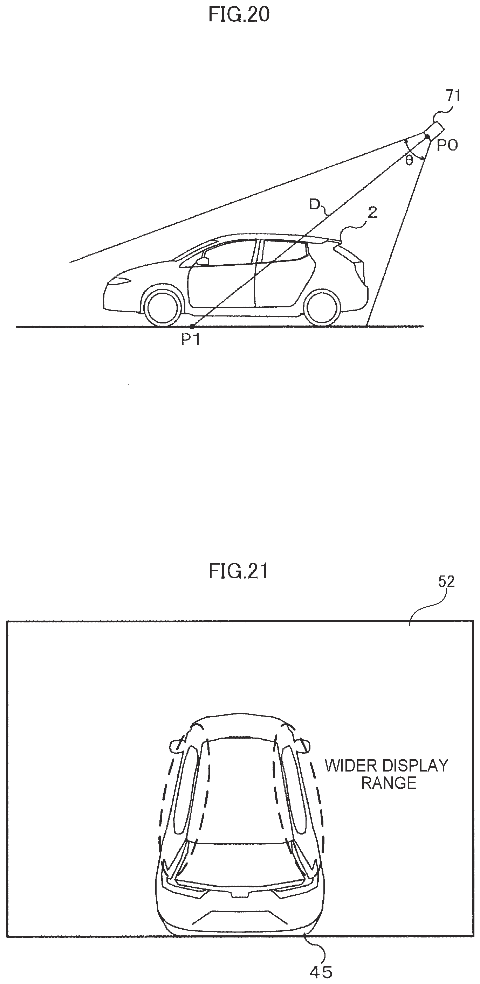

In S18, the CPU 31 performs a process of changing the viewing radius and the viewing angle of the virtual viewpoint 71 without changing the position of the virtual viewpoint 71. FIG. 20 is a diagram showing the viewing radius and the viewing angle of the virtual viewpoint 71. Points P0 and P1 correspond to the virtual viewpoint and a virtual gaze point, respectively, in the virtual space. A distance D between the points P0 and P1 corresponds to a viewpoint radius, and an angle θ corresponds to the above viewing angle.

In S18, the CPU 31 changes the angle θ and coordinate parameters of the points P0 and P1 to increase the viewpoint radius and reduce the viewing angle compared to the current state. FIG. 21 shows an example of the bird's-eye view image 52 generated by changing the viewing radius and the viewing angle of the virtual viewpoint 71 in S18. As shown in FIG. 21, the bird's-eye view image 52 generated by increasing the viewpoint radius of the virtual viewpoint 71 and reducing the viewing angle has a wider display range of the right and left sides of the host vehicle image 45 than the bird's-eye view image 52 shown in FIG. 17 before the changes. Therefore, the bird's-eye view image allows the user to more easily view the areas around the right and left sides of the host vehicle image 45. As a result, it is possible to provide display that more easily informs the user about the positional relationship between the vehicle and the left and right obstacles. Although images other than the host vehicle image 45 are omitted in the bird's-eye view image 52 shown in FIG. 21, the obstacles around the vehicle are also displayed in actuality. The viewing radius and the viewing angle of the virtual viewpoint 71 are changed in S18 under the condition that at least both the host vehicle image 45 and the avoided obstacles 76 (it is sufficient to include at least part of them) remain displayed in the bird's-eye view image 52.

In S17, when the steering operation to avoid approaching the obstacle is performed, the position of the virtual viewpoint is changed to provide the display that more easily informs the user about the positional relationship between the vehicle and the obstacle. When the vehicle 2 is traveling on a road with a plurality of factors that hinders the traveling in the traveling direction, the steering operation to avoid approaching the obstacle is expected to occur frequently. Therefore, when the virtual viewpoint is moved as in S17, the virtual viewpoint is moved successively, and the user has difficulty in viewing the screen, leading to a problem of motion sickness. When the vehicle 2 is traveling on a road with a plurality of factors that hinders the traveling in the traveling direction, the above problem is solved by changing the viewing radius and the viewing angle of the virtual viewpoint 71 in S18 without changing the position of the virtual viewpoint 71. However, the process in S16 and S18 is not essential, and the position of the virtual viewpoint 71 may be always changed (S17) regardless of whether the vehicle 2 is traveling on a road with a plurality of factors that hinders the traveling in the traveling direction.

In S18, only the viewpoint radius and the viewing angle are changed, but the position and the angle of the virtual viewpoint may be adjusted to the extent that the above effects are not impaired. The viewpoint radius and the viewing angle may be animated to change over time, or may be switched instantly. The viewing radius and the viewing angle may be changed at the timing when the driving operation to avoid approaching the obstacle is performed (at the start of the driving operation), immediately before the driving operation to avoid approaching the obstacle is performed, or after the driving operation to avoid approaching the obstacle is performed (after an elapse of a predetermined period from the start of the driving operation). Then, the process proceeds to S19.

In S19, the CPU 31 superimposes the object image particularly on the bird's-eye view image 52 out of the bird's-eye view image 52 and the overhead view image 53 displayed on the liquid crystal display 4 in S13. In the following description, the object image displayed in the second embodiment will be referred to as screening image 75. The screening image 75 is an image displayed in the bird's-eye view image 52 between the vehicle and the obstacle avoided by the steering operation, and is specifically an image of a three-dimensional (3D) wall erected on a road surface with a thickness toward the vehicle. In the second embodiment, the screening image 75 is superimposed only on the bird's-eye view image 52, but the screening image 75 may also be superimposed on the overhead view image 53.

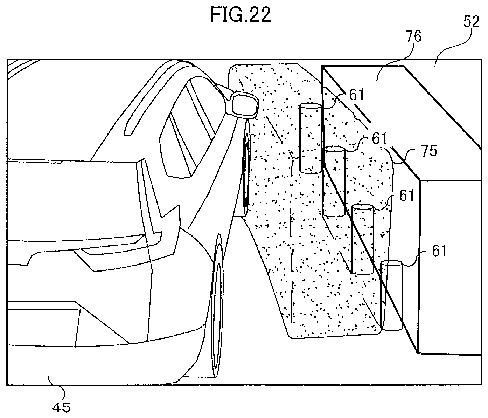

FIG. 22 shows an example of the bird's-eye view image 52 displayed on the liquid crystal display 4 when the screening image 75 is displayed. As shown in FIG. 22, the screening image 75 is displayed between the host vehicle image 45 and the obstacle 76 avoided by the steering operation. In the example shown in FIG. 22, the object images 61 disposed at predetermined intervals to surround the obstacle 76 are also displayed as in the first embodiment, but the object images 61 need not be displayed in the second embodiment. When displaying the object images 61, the object images 61 are desirably displayed at predetermined intervals to surround the detected obstacle at the time when the obstacle is detected, regardless of whether the driving operation to avoid approaching the obstacle is performed as in the first embodiment.

In the vehicle 2, the driving operation to avoid approaching the obstacle is performed (S15: YES). Therefore, in the bird's-eye view image 52 subsequently displayed on the liquid crystal display 4, the host vehicle image 45 moves closer to the obstacle 76 along with the traveling of the vehicle 2, and then comes into contact with the screening image 75, or turns and moves away from the screening image 75 immediately before the host vehicle image 45 comes into contact. Thus, the bird's-eye view image 52 displayed on the liquid crystal display 4 shows a scene in which the screening image 75 displayed between the obstacle 76 and the host vehicle image 45 bounces the host vehicle image 45, and the user can intuitively grasp that the control to avoid the obstacle 76 is performed through the autonomous driving assistance.

The screening image 75 is displayed in association with the driving operation to avoid approaching the obstacle around the vehicle. The specific display timing may be the timing when the driving operation to avoid approaching the obstacle is performed (at the start of the driving operation), immediately before the driving operation to avoid approaching the obstacle is performed, or after the driving operation to avoid approaching the obstacle is performed (after an elapse of a predetermined period from the start of the driving operation).

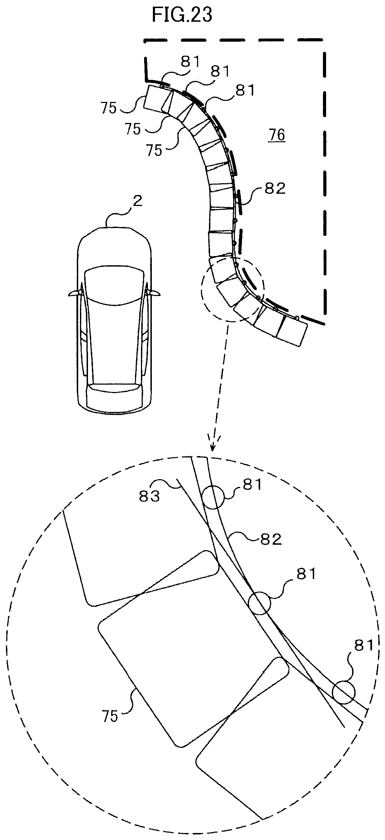

Next, an example of the method for drawing the screening image 75 in S19 will be described with reference to FIG. 23. The CPU 31 measures the distance from the vehicle 2 to the detected obstacle 76 at predetermined intervals using the ultrasonic sensors 9A to 9L, the cameras, etc. In the example shown in FIG. 23, the distance from the vehicle 2 to the obstacle 76 is detected at each detection point 81. The CPU 31 disposes the shape of the screening image 75 stored in advance in the flash memory 34 at each detection point 81, determines an approximate curve 82 from each detection point 81, and determines a tangent 83 to the approximate curve at each detection point. By disposing the screening image 75 in accordance with the angle of the tangent 83, the screening image 75 is drawn such that the facing surface is oriented to the vehicle 2. Thus, the individual screening images 75 are connected together to form a single screening image 75. The method for drawing the screening image 75 shown in FIG. 23 is merely an example, and the screening image 75 may be drawn by a method other than the above.

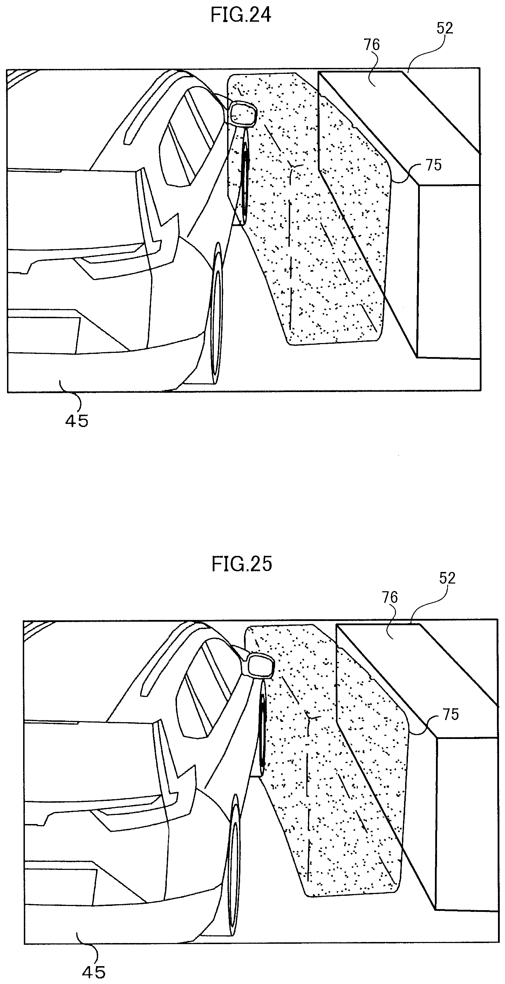

When the host vehicle image 45 comes into contact with the screening image 75, the screening image 75 is drawn in an appearance in which the outer peripheral surface of the screening image 75 conforms to the shape of the host vehicle image 45 in a range in which the screening image 75 and the host vehicle image 45 are in contact with each other. FIG. 24 shows, as a comparative example, the bird's-eye view image 52 displayed when the screening image 75 is not drawn such that the shape of the screening image 75 conforms to the shape of the host vehicle image 45. FIG. 25 shows the bird's-eye view image 52 displayed when the screening image 75 is drawn such that the shape of the screening image 75 conforms to the shape of the host vehicle image 45.

Comparing FIGS. 24 and 25, in the bird's-eye view image 52 shown in FIG. 24, when the host vehicle image 45 comes into contact with the screening image 75, the host vehicle image 45 is embedded in the screening image 75. Even when the host vehicle image 45 then moves away from the screening image 75, it is difficult to give the user the feeling that the screening image 75 bounces the host vehicle image 45. In the bird's-eye view image 52 shown in FIG. 25, when the host vehicle image 45 comes into contact with the screening image 75, the outer peripheral surface of the screening image 75 is deformed to an appearance that conforms to the shape of the host vehicle image 45. Therefore, it is possible to provide a representation that the host vehicle image 45 sinks in the screening image 75 and to give the user the feeling that the screening image 75 bounces the host vehicle image 45. The change in shape of the screening image 75 caused by the contact between the screening image 75 and the host vehicle image 45 is returned to the pre-deformation state when the host vehicle image 45 subsequently moves away from the screening image 75.

In the second embodiment, as the method for drawing the screening image 75 such that the shape of the screening image 75 conforms to the shape of the host vehicle image 45, the host vehicle image 45 and the screening image 75 are drawn in this order, the distances of polygons from the virtual viewpoint (hereinafter referred to as depth values) are compared, and the one with the smaller depth value is drawn. Therefore, when a certain object is present in the foreground, an object behind it is not displayed. That is, by comparing the depth values of the polygons of the host vehicle image 45 and the screening image 75, only the host vehicle image 45 located in the foreground is displayed in the range in which the host vehicle image 45 overlaps the screening image 75. As the method for drawing the screening image 75 such that the shape of the screening image 75 conforms to the shape of the host vehicle image 45, other conventional technologies, general-purpose technologies, or standard technologies may be used, such as changing the shape of the screening image 75 into a recessed shape that conforms to the shape of the host vehicle image 45.

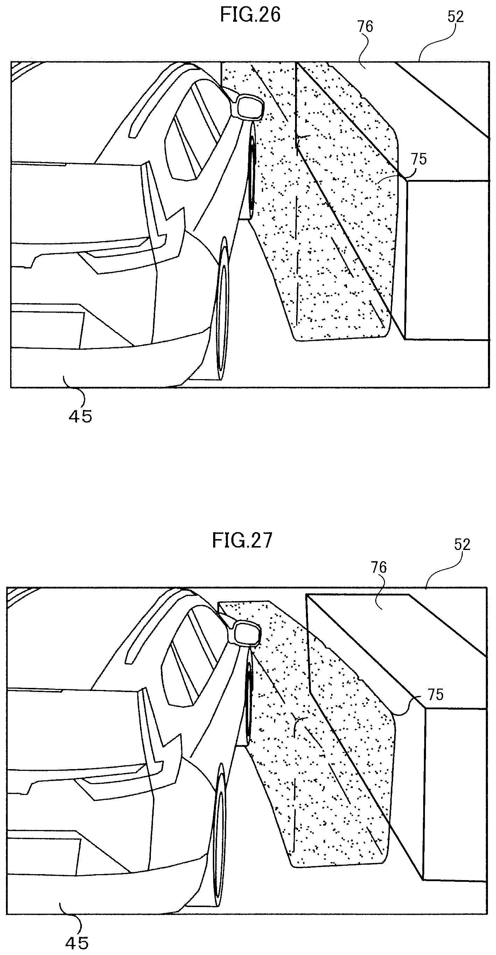

In the second embodiment, the shape of the screening image 75 stored in advance in the flash memory 34 is described as a cube. The shape of the screening image 75 is not limited to this and may be any other three-dimensional shape, a line, or a plane. Further, the screening image 75 is desirably drawn such that the height of the screening image 75 is smaller than the height of the vehicle 2. Therefore, the user can easily grasp that the host vehicle image 45 and the screening image 75 are in contact with each other. For example, FIG. 26 shows the bird's-eye view image 52 when a screening image 75 taller than the host vehicle image 45 is displayed, and FIG. 27 shows the bird's-eye view image 52 when a screening image 75 shorter than the host vehicle image 45 is displayed. Comparing FIGS. 26 and 27, in the bird's-eye view image 52 shown in FIG. 27, the screening image 75 shorter than the host vehicle image 45 is displayed. Therefore, the user can easily grasp the boundary of the contact between the host vehicle image 45 and the screening image 75, that is, how the shape of the screening image 75 is changed. Thus, the image allows the user to easily grasp the contact between the host vehicle image 45 and the screening image 75. In the bird's-eye view image 52 shown in FIG. 26, the screening image 75 taller than the host vehicle image 45 is displayed. Therefore, the image poses difficulty in grasping the boundary of the contact between the host vehicle image 45 and the screening image 75.

Further, the shape of the screening image 75 can be changed depending on the type of the obstacle avoided by the steering operation. For example, the screening image 75 can be made thicker when the obstacle is a person, and the screening image 75 can be made thinner when the obstacle is an obstacle such as a color cone (registered trademark) that may intentionally cause the vehicle to approach. The thickness of the screening image 75 may be changed depending on whether the obstacle is a moving object. Alternatively, the thickness of the screening image 75 may be changed based on information acquired from the front camera 6, the rear camera 7, the side cameras 8A, 8B, the ultrasonic sensors 9A to 9L, and the other sensors 36. In addition, the shape of the screening image 75 may be changed depending on the distance between the vehicle 2 and the obstacle. For example, the screening image 75 may be drawn to be thicker as the distance between the vehicle 2 and the obstacle decreases. Further, not only the thickness but also the height of the screening image 75 may be changed. The color of the screening image 75 may be changed instead of the shape depending on the type of the obstacle. For example, an obstacle with a greater risk (e.g., a pedestrian) can be displayed in a prominent color (e.g., red), or can be flashed to become prominent.

The screening image 75 may be displayed semi-transparently (e.g., transparency of 30%) instead of opaquely. Therefore, the bird's-eye view image 52 allows the user to recognize the surrounding environment more easily. The distance between the vehicle 2 and the obstacle may be measured, and the screening image 75 may be drawn such that the transparency is changed depending on the measured distance. For example, the screening image 75 may be drawn such that the transparency is gradually changed to decrease as the distance between the vehicle 2 and the obstacle decreases, and to increase as the distance between the vehicle 2 and the obstacle increases. Therefore, the transparency of the screening image 75 decreases as the host vehicle image 45 sinks more in the screening image 75. Thus, it is possible to represent a greater repulsion. Further, the transparency of the screening image 75 may be changed depending on an elapsed period from the start of the driving operation to avoid approaching the obstacle, or depending on the amount of the driving operation. For example, the transparency may be gradually reduced along with an elapse of time from the start of the driving operation to avoid approaching the obstacle. Alternatively, the transparency may be changed depending on the amount of change in steering angle to avoid approaching the obstacle. More specifically, the transparency may be changed to decrease as the steering angle increases.

As described above, when the driving operation to avoid approaching the obstacle is performed, the transparency of the host vehicle image 45 included in the bird's-eye view image 52 is reduced to clarify the positional relationship between the vehicle and the obstacle. The transparency of the host vehicle image 45 may be changed simultaneously with the display of the screening image 75, simultaneously with the processing of the virtual viewpoint in S17 or S18, or simultaneously with the driving operation by the driving assistance device. The host vehicle image 45 may be switched to an opaque state (transparency of 0%) at a time, or the transparency may be reduced gradually.

When the host vehicle image 45 comes into contact with the screening image 75, a clearance may be provided between the host vehicle image 45 and the screening image 75. As a method for providing the clearance, a transparent host vehicle image larger than the host vehicle image 45 is superimposed on the host vehicle image 45 to provide a representation that the clearance is always present between the screening image 75 and the host vehicle image 45 on the screen display. By providing the clearance, the representation is not such that the host vehicle comes into contact with the obstacle on the screen display. Therefore, the user's misjudgment and anxiety can be reduced. As the method for providing the clearance between the host vehicle image 45 and the screening image 75, other conventional technologies, general-purpose technologies, or standard technologies may be used, such as changing the shape of the obstacle.

The screening image 75 drawn in S19 is then gradually hidden as the driving operation to avoid approaching the obstacle 76 is completed. For example, the transparency can be gradually increased after the obstacle is avoided and the control to return the steering wheel toward the neutral position is started, and the screening image 75 can be hidden (transparency of 100%) near the neutral position. Alternatively, the screening image 75 may be displayed continuously until the steering wheel comes to the neutral position, and the screening image 75 may be switched to the hidden state in one step at the timing when the steering wheel comes to the neutral position. Alternatively, the screening image 75 may be hidden after an elapse of a predetermined period from the start of the display of the screening image 75, or after movement by a predetermined distance. The position of the virtual viewpoint changed in S17 or the viewing radius and the viewing angle changed in S18 is/are also returned to the pre-change state when the screening image 75 is hidden. The position, viewing radius, and viewing angle of the virtual viewpoint may be gradually returned in the same way as that when the screening image 75 is hidden, or may be returned in one step at a specific timing after the obstacle is avoided.

Then, in S20, the CPU 31 determines whether to terminate the assisted driving through the autonomous driving assistance. The assisted driving through the autonomous driving assistance may be terminated, for example, under the condition that the user performs a predetermined termination operation on the operation unit 3, or under the condition that the shift position is changed to "P" or the engine is turned off. Alternatively, the termination condition may be that the autonomous driving assistance cannot be continued.

When determination is made that the assisted driving through the autonomous driving assistance is terminated (S20: YES), the driving assistance processing program is terminated. When determination is made that the assisted driving through the autonomous driving assistance is not terminated (S20: NO), the process returns to S12, and the assistance image is continuously displayed on the liquid crystal display 4.

In the autonomous driving assistance, the steering operation to avoid departing from a marking line is performed by lane departure prevention assistance in addition to the steering control to avoid the obstacle. In the driving assistance processing program according to the second embodiment, when the driving operation to avoid approaching the obstacle is performed, the screening image 75 is displayed between the vehicle and the obstacle to be avoided (S19). Even when the driving operation is performed to avoid approaching a marking line (e.g., a center line of a road, a lane boundary line, an outer line of a road, or a parking space line) instead of the obstacle, the screening image 75 may be similarly displayed between the vehicle and the marking line to be avoided. The screening image 75 may be displayed at the timing when the driving operation to avoid approaching the marking line is performed, immediately before the driving operation to avoid approaching the marking line is performed, or after the driving operation to avoid approaching the marking line is performed. For details, the only difference is that the obstacle is replaced by the marking line, and the processing details are the same. For example, the thickness of the screening image 75 may be changed depending on the type of the avoided marking line (e.g., a center line of a road, a lane boundary line, an outer line of a road, or a parking space line). That is, the screening image 75 is displayed to be thicker as the marking line has a greater risk of departure, such as a center line of a road.

As described in detail above, in the driving assistance device 1 according to the second embodiment and the computer program executed by the driving assistance device 1, a vehicle surrounding image showing the surroundings of the vehicle 2 is displayed on the liquid crystal display 4 (S13), and in association with the driving operation to avoid approaching an obstacle or a marking line around the vehicle through the automatic control, the screening image 75 is displayed in the vehicle surrounding image between the vehicle and the obstacle or the marking line to be avoided (S19). Therefore, the user can intuitively grasp that the driving operation to avoid the obstacle or the marking line through the autonomous driving assistance is performed. As a result, the user is not confused even when the driving operation to avoid the obstacle or the marking line is performed automatically. The vehicle surrounding image is an image showing the surroundings of the vehicle that are viewed from the virtual viewpoint. The position of the virtual viewpoint is changed and the vehicle surrounding image is displayed in association with the driving operation to avoid approaching the obstacle or the marking line around the vehicle through the automatic control (S17). By changing the position of the virtual viewpoint, the vehicle surrounding image allows the user to more easily grasp the relationship between the vehicle and the obstacle or the marking line.

The screening image 75 is displayed as an image of a three-dimensional object having a thickness toward the vehicle. Therefore, when the driving operation to avoid approaching the obstacle or the marking line is performed, the user can be given the feeling that the displayed screening image 75 bounces the vehicle. Thus, the user can intuitively grasp that the driving operation to avoid the obstacle or the marking line is performed.

In the vehicle surrounding image, the host vehicle image 45 showing the exterior of the vehicle is displayed at a current position of the vehicle. The screening image 75 is displayed in an appearance in which the outer peripheral surface of the screening image 75 conforms to the shape of the host vehicle image 45 in the range in which the screening image 75 and the host vehicle image 45 are in contact with each other in the vehicle surrounding image. Therefore, it is possible to provide a representation that the host vehicle image 45 sinks in the screening image 75 and to give the user the feeling that the screening image 75 bounces the host vehicle image 45.

### [Summary of Second Embodiment]

The second embodiment preferably has at least the following configuration.

A driving assistance device (1) that performs automatic control on at least part of driving operations on a vehicle (2) is configured to:
display, on a display device (4), a vehicle surrounding image (52) showing surroundings of the vehicle; and
display, in association with a driving operation to avoid approaching an obstacle (76) or a marking line around the vehicle through the automatic control, a screening image (75) in the vehicle surrounding image between the vehicle and the obstacle or the marking line to be avoided.

With this configuration, the user can intuitively grasp that the driving operation to avoid the obstacle or the marking line through the autonomous driving assistance is performed by displaying the screening image between the host vehicle and the obstacle or the marking line in association with the driving operation to avoid the obstacle or the marking line through the autonomous driving assistance. As a result, the user is not confused even when the driving operation to avoid the obstacle or the marking line is performed automatically.

In the second embodiment, it is preferable that the vehicle surrounding image (52) be an image showing the surroundings of the vehicle (2) that are viewed from a virtual viewpoint (71), and
a position of the virtual viewpoint be changed and the vehicle surrounding image be displayed in association with the driving operation to avoid approaching the obstacle (76) or the marking line around the vehicle through the automatic control.

With this configuration, by changing the position of the virtual viewpoint, the vehicle surrounding image allows the user to more easily grasp the relationship between the vehicle and the obstacle or the marking line.

In the second embodiment, it is preferable that the screening image (75) be displayed as an image of a three-dimensional object having a thickness toward the vehicle.

With this configuration, when the driving operation to avoid approaching the obstacle or the marking line is performed, the user can be given the feeling that the displayed screening image bounces the vehicle. Thus, the user can intuitively grasp that the driving operation to avoid the obstacle or the marking line is performed.

In the first embodiment, it is preferable that, in the vehicle surrounding image (52), a host vehicle image (45) showing an exterior of the vehicle be displayed at a current position of the vehicle (2), and
the screening image (75) be displayed in an appearance in which an outer peripheral surface of the screening image conforms to a shape of the host vehicle image in a range in which the screening image and the host vehicle image are in contact with each other in the vehicle surrounding image.

With this configuration, it is possible to provide a representation that the host vehicle image sinks in the screening image and to give the user the feeling that the screening image bounces the host vehicle image.

### [Appendix]

The above embodiments also disclose the following inventions. In the following description, the names and expressions of the corresponding components in the embodiments and the reference signs used in the drawings are added in parentheses for reference. However, the components of each invention are not limited to the appendix.

### (Invention A)

The driving assistance device (1) according to claim 3, wherein the thickness of the screening image (75) is changed depending on a type of the obstacle (76) or the marking line to be avoided.

Thus, it is possible to suggest the risk level of the obstacle or the marking line to be avoided from the shape of the screening image.

### (Invention B)

The driving assistance device (1) according to claim 1, wherein:
in the vehicle surrounding image (52), a host vehicle image (45) showing an exterior of the vehicle is displayed at a current position of the vehicle (2); and
the host vehicle image is displayed in the vehicle surrounding image such that a transparency of the host vehicle image is changed to a lower transparency in association with the driving operation to avoid approaching the obstacle or the marking line around the vehicle through the automatic control.

Thus, it is possible to clarify the positional relationship between the vehicle and the obstacle when the driving operation to avoid approaching the obstacle or the marking line is performed.

### (Invention C)

The driving assistance device (1) according to claim 1, wherein the screening image (75) is displayed such that a transparency of the screening image is changed depending on at least one of a distance from the vehicle (2) to the obstacle (76) or the marking line, an elapsed period from a start of the driving operation, and an amount of the driving operation.

Thus, the changing of the transparency of the screening image can achieve a situation in which the surrounding environment can be recognized more easily by increasing the transparency when the clear screening image is not needed, and can clarify the positional relationship between the vehicle and the obstacle by reducing the transparency when the clear screening image is needed.

### (Invention D)

The driving assistance device (1) according to claim 2, wherein, when the driving operation to avoid approaching the obstacle (76) or the marking line around the vehicle (2) through the automatic control is performed, the position of the virtual viewpoint (71) is moved closer to the vehicle and in a direction in which the obstacle or the marking line to be avoided is present, and the vehicle surrounding image is displayed.

By changing the position of the virtual viewpoint, the vehicle surrounding image allows the user to grasp, in more detail, the relationship between the vehicle and the obstacle or the marking line to be avoided.

### (Invention E)

The driving assistance device (1) according to claim 2, wherein:
in the vehicle surrounding image (52), a host vehicle image (45) showing an exterior of the vehicle is displayed at a current position of the vehicle (2); and
when the vehicle is traveling on a road with a plurality of factors that hinders traveling of the vehicle in a traveling direction, a viewing radius and a viewing angle are changed and the vehicle surrounding image is displayed without changing the position of the virtual viewpoint (71) though the driving operation to avoid approaching the obstacle or the marking line around the vehicle through the automatic control is performed.

By changing the viewing radius and the viewing angle without moving the virtual viewpoint in a situation in which the virtual viewpoint is moved successively, it is possible to provide display that more easily informs the user about the positional relationship between the vehicle and the obstacle.

The present invention is not limited to the above embodiments. As a matter of course, various improvements and modifications may be made without departing from the gist of the present invention.
For example, in the first and second embodiments, an image of the scene around the vehicle that is captured by the camera is displayed on the liquid crystal display 4 in the vehicle, and the object image or the screening image is displayed on the liquid crystal display 4, thereby superimposing the object image or the screening image on the scene around the vehicle. However, a head-up display system (HUD) may be used as means for displaying the image to be superimposed on the scene around the vehicle. In the head-up display system, for example, the object image or the screening image displayed on a display in the vehicle is reflected onto a windshield, and the user views the image. Thus, the object image or the screening image (more precisely, a virtual image of the object image or the screening image) can be superimposed on the real scene viewed by the user through the windshield, and the user can view the superimposed image.

In the first and second embodiments, the bird's-eye view image and the overhead view image generated from the images captured by the front camera 6, the rear camera 7, and the side cameras 8A, 8B are displayed on the liquid crystal display 4 as the images of the scene around the vehicle. However, the image captured by the front camera 6 or the rear camera 7 may be displayed as it is on the liquid crystal display 4 instead of the processed image, and the object image or the screening image may be superimposed on that image.

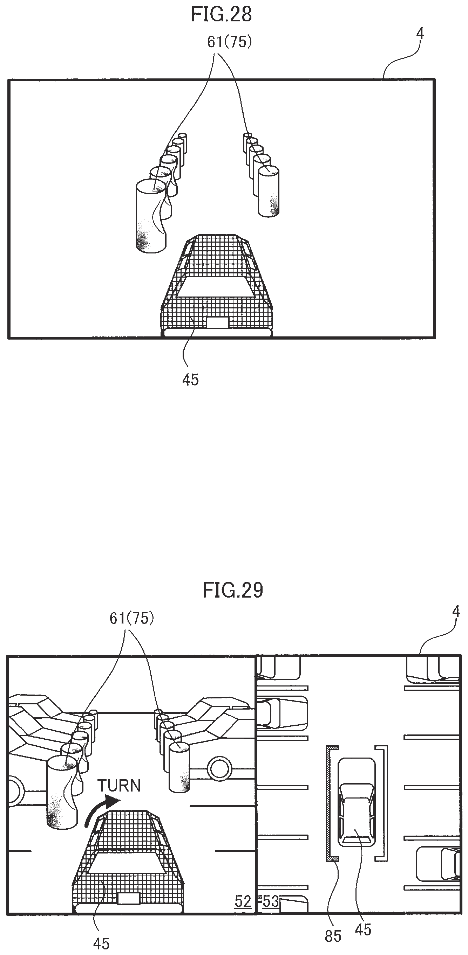

Further, the scene around the vehicle displayed on the liquid crystal display 4 may be a virtual scene image (e.g., a three-dimensional map image) of the surroundings of the vehicle reproduced using CG (computer graphics) instead of the image captured by the camera. For example, a three-dimensional map image of an area around the current position is acquired or generated and displayed on the liquid crystal display 4, and the object image or the screening image is displayed on the displayed three-dimensional map image. Even in this case, the same effects are attained. As shown in FIG. 28, as the assistance image displayed on the liquid crystal display 4, only the host vehicle image 45 and the object image 61 or the screening image 75 may be displayed without displaying the scene around the vehicle.

In the first embodiment, the shape of the object image is changed (S7, S8) when the steering operation to avoid the obstacle is performed. As the autonomous driving assistance to avoid the obstacle, avoidance by a braking operation (deceleration) is conceivable in addition to the avoidance by the steering operation. Therefore, the shape of the object image may be changed when the braking operation to avoid the obstacle is performed. Further, the shape of the object image may be changed in a similar manner when any other vehicle operation to avoid the obstacle is performed in addition to the steering and braking operations.

In the second embodiment, the screening image 75 is displayed (S19) when the steering operation to avoid approaching the obstacle is performed. As the autonomous driving assistance to avoid approaching the obstacle, avoidance by a braking operation (deceleration) is conceivable in addition to the avoidance by the steering operation. Therefore, the screening image 75 may be displayed when the braking operation to avoid approaching the obstacle is performed. Further, the screening image 75 may be displayed in a similar manner when any other vehicle operation to avoid approaching the obstacle is performed in addition to the steering and braking operations.

In the first and second embodiments, it is preconditioned that the assistance images shown in FIGS. 14 and 22 are displayed while the vehicle is traveling through the autonomous driving assistance. However, the assistance images shown in FIGS. 14 and 22 may also be displayed while the vehicle is traveling through manual driving. In this case, the shape of the object image is changed (S7, S8) or the screening image 75 is displayed (S19) when the steering or braking operation to avoid the obstacle is performed during the manual driving.

In the first and second embodiments, the object image 61 or the screening image 75 is displayed only in the bird's-eye view image 52 out of the bird's-eye view image 52 and the overhead view image 53 displayed on the liquid crystal display 4. However, the object image 61 or the screening image 75 may also be displayed in the overhead view image 53. As shown in FIG. 29, icons 85 may be displayed around the host vehicle image 45 in the overhead view image 53 in place of the object image and the screening image 75. The icons 85 are constituted by a pair of left and right icons. For example, when the steering operation to avoid the obstacle is performed, the icon 85 near the position of the avoided obstacle is flashed or changed in display color. In addition to the display on the liquid crystal display 4, a sound may be output from the speaker 5 to notify the user about the approach of the obstacle or the avoidance of the obstacle.

In the first embodiment, the shape of the object image is changed by recessing part of the outer peripheral surface of the object (FIG. 12). Conversely, the shape of the object image may be changed by projecting part of the outer peripheral surface of the object. The recessing or projecting range may be the entire outer peripheral surface of the object instead of part of the outer peripheral surface.

In the first and second embodiments, the process of the driving assistance processing program (FIG. 3 or 15) is performed by the driving assistance ECU 10 of the driving assistance device 1. However, the performing entity can be changed as appropriate. For example, a control unit of the liquid crystal display 4, a vehicle control ECU, a control unit of the navigation device, or any other in-vehicle device may perform the process.

### Description of the Reference Numerals

1 ... driving assistance device, 2 ... vehicle, 4 ... liquid crystal display (display device), 6 ... front camera, 7 ... rear camera, 8A, 8B ... side camera, 10 ... driving assistance ECU, 52 ... bird's-eye view image (vehicle surrounding image), 53 ... overhead view image, 61 ... object image, 71 ... virtual viewpoint, 75 ... screening image, 76 ... obstacle

## Claims

1. A driving assistance device that performs automatic control on at least part of driving operations on a vehicle, the driving assistance device being configured to:
display, on a display device, a vehicle surrounding image showing surroundings of the vehicle; and
display, in association with a driving operation to avoid approaching an obstacle or a marking line around the vehicle through the automatic control, a screening image in the vehicle surrounding image between the vehicle and the obstacle or the marking line to be avoided.

2. The driving assistance device according to claim 1, wherein:
the vehicle surrounding image is an image showing the surroundings of the vehicle that are viewed from a virtual viewpoint; and
a position of the virtual viewpoint is changed and the vehicle surrounding image is displayed in association with the driving operation to avoid approaching the obstacle or the marking line around the vehicle through the automatic control.

3. The driving assistance device according to claim 1, wherein the screening image is displayed as an image of a three-dimensional object having a thickness toward the vehicle.

4. The driving assistance device according to claim 3, wherein:
in the vehicle surrounding image, a host vehicle image showing an exterior of the vehicle is displayed at a current position of the vehicle; and
the screening image is displayed in an appearance in which an outer peripheral surface of the screening image conforms to a shape of the host vehicle image in a range in which the screening image and the host vehicle image are in contact with each other in the vehicle surrounding image.
